(19) Europäisches Patentamt
European Patent Office
Office européen des brevets

(11) EP 2 079 670 B1

(12) # EUROPÄISCHE PATENTSCHRIFT

(45) Veröffentlichungstag und Bekanntmachung des Hinweises auf die Patenterteilung:
**03.08.2016 Patentblatt 2016/31**

(21) Anmeldenummer: **07821404.6**

(22) Anmeldetag: **16.10.2007**

(51) Int Cl.:
***C04B 14/06*** *(2006.01)* ***C04B 40/00*** *(2006.01)*

(86) Internationale Anmeldenummer:
**PCT/EP2007/061039**

(87) Internationale Veröffentlichungsnummer:
**WO 2008/046831 (24.04.2008 Gazette 2008/17)**

(54) **WÄSSRIGE DISPERSIONEN GEFÄLLTER KIESELSÄUREN ZUR STEIGERUNG DER FRÜHFESTIGKEIT IN ZEMENTARTIGEN ZUBEREITUNGEN**

AQUEOUS DISPERSIONS OF PRECIPITATED SILICA FOR INCREASING EARLY STRENGTH IN CEMENTITIOUS PREPARATIONS

DISPERSIONS AQUEUSES D'ACIDES SILICIQUES PRÉCIPITÉS POUR AUGMENTER LA RÉSISTANCE INITIALE DANS DES PRÉPARATIONS À BASE DE CIMENT

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **20.10.2006 DE 102006049524**

(43) Veröffentlichungstag der Anmeldung:
**22.07.2009 Patentblatt 2009/30**

(73) Patentinhaber:
- **Evonik Degussa GmbH**
  **45128 Essen (DE)**
- **Construction Research & Technology GmbH**
  **83308 Trostberg (DE)**
  Benannte Vertragsstaaten:
  **BG CH CY DE DK EE ES FR GB GR IE IS IT LI LT LU LV MC MT SI**

(72) Erfinder:
- **FISCHER, Ulrich**
  **63776 Mömbris (DE)**
- **WIELAND, Philipp**
  **80935 München (DE)**
- **HÜBSCH, Christian**
  **83703 Gmund (DE)**
- **GRASSL, Harald**
  **84550 Feichten an der Alz (DE)**
- **BECHER, Kerstin**
  **83530 Waldhausen (DE)**
- **SCHEUL,Stefanie**
  **84558 Tyrlaching (DE)**
- **JETZLSPERGER, Eva**
  **84579 Unterneukirchen (DE)**

(56) Entgegenhaltungen:
**EP-A- 0 492 146**
**EP-A- 0 673 897**
**WO-A-01/98227**
**WO-A1-2007/088111**
**FR-A- 2 841 549**
**JP-A- 2 157 145**
**JP-A- 61 117 143**
**JP-A- 2000 281 412**
**US-A- 3 135 617**
**US-A1- 2002 014 187**
**US-A1- 2002 112 650**
**US-B2- 6 752 866**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 079 670 B1

## Beschreibung

Die Erfindung betrifft eine Dispersion auf Basis von gefälltem Siliciumdioxid und eines Fließmittels, sowie deren Verwendung als Betonzusatzmittel.

Zwei wesentliche Kriterien beim Einsatz von zementartigen Zubereitungen sind einerseits deren Förderbarkeit zum Ort der Verarbeitung und andererseits die Dauer, bis zu der diese Zubereitung eine Festigkeit erreicht, die eine Weiterver- oder bearbeitung erlaubt. Diese Dauer wird in der Literatur auch als Frühfestigkeit beschrieben und ist im Rahmen des vorliegenden Textes als die Festigkeit einer zementartigen Zubereitung nach < 48 h der Zementhydratation zu verstehen.

Es ist bekannt, dass die Förderbarkeit durch den Zusatz von sogenannten Fließmitteln beeinflusst werden kann (vgl. EP-A 214 412, DE-PS 16 71 017, US 5,707,445 B1, EP 1 110 981 A2, EP 1 142 847 A2).

Es ist außerdem seit langem bekannt, beispielsweise aus US3135617, dass durch Zusatz eines feinteiligen amorphen Siliciumdioxids zu zementartigen Zubereitungen eine Beschleunigung des Abbindens erreicht werden kann. Dies konnte sich jedoch nicht durchsetzen, da dadurch die Verarbeitbarkeit des Frischbetons stark eingeschränkt wurde.

In WO02/070429 ist ein Kompositmaterial offenbart, welches anorganische Aggregate, ultrafeine Partikel, ein zementhaltiges Bindemittel und einen Betonverflüssiger enthält. Das Kompositmaterial erlaubt die Herstellung eines stark verflüssigten Betons, bei dem kein Ausbluten auftritt. Als ultrafeine Partikel werden hauptsächlich silica fume"-Partikel eingesetzt, die im Zusammenhang mit der Herstellung von Silicium-Metall anfallen. "Silica fume" Partikel zeigen in Zement- beziehungsweise Betonzusammensetzungen einen starken Füllereffekt, sind dabei allerdings aufgrund ihrer geringen spezifischen Oberfläche wenig reaktiv. Als weitere Partikel in dieser Größenordnung können Tonerde, Flugasche, Puzzolane, Calciumcarbonat, Aluminiumoxid, Bariumsulfat und Titandioxid eingesetzt werden. Die angegebenen Partikel haben den Nachteil, dass sie zu niedrige Keimbildungsraten der festigkeitsbildenden Phasen haben und somit zu geringen Frühfestigkeiten führen.

Der Anteil der ultrafeinen Partikel, bezogen auf die Gesamtmenge des Kompositmaterials, beträgt 1 bis 30 Gew.-% beziehungsweise ca. 10 bis 25 Ges.-% in den Ausführungsbeispielen, bezogen auf die Summe von Zement und ultrafeinen Partikeln. Damit ist der erforderliche Anteil an ultrafeinen Partikeln sehr hoch.

In US6752866 wird ein Verfahren zur Verbesserung der Frühfestigkeit offenbart, bei dem man eine wässerige Dispersion, die einen mineralischen Füllstoff und ein spezielles Dispergiermittel enthält, zu Zement gilt. Als mineralische Füllstoffe können Calciumcarbonat, Bariumcarbonat, Kalkstein, Dolomit, Talk, Siliciumdioxid, Titandioxide, Kieselgur, Eisenoxid, Manganoxid, Kalk, Kaolin, Ton, Mica, Gips, Flugasche, Schlacke, Calciumsulfat, Zeolithe, Basalt, Bariumsulfat oder Aluminiumtrihydroxid eingesetzt werden. Bevorzugt wird Calciumcarbonat eingesetzt. Die offenbarten, mittleren Partikeldurchmesser der eingesetzten mineralischen Füllstoffe liegen im Bereich von ca. 2 bis ca. 10 $\mu$m. Wesentlich für die in US6752866 offenbarte Erfindung ist ein spezielles Dispergiermittel. Dieses enthält ein Copolymer, welches durch radikalische Copolymerisation eines Alkoxypolyalkylenglykol-Urethanes mit einem anionischen oder nichtionischen Monomer erhalten wird. Es werden keine konkreten Angaben zu den erforderlichen Mengen von mineralischem Füllstoff, Dispergiermittel und Zement gemacht. Aus den Ausführungsbeispielen ist zu entnehmen, dass der Anteil an mineralischem Füllstoff mit 10 Gew.-% (Siliciumdioxid, Test Nummer 12) beziehungsweise 30 Gew.-% (Siliciumdioxid, Test Nummer 17) und der Anteil an Dispergiermittel 0,5 (Test Nummer 17) beziehungsweise 0,75 Ges.-% (Test Nummer 12), bezogen auf Siliciumdioxid, beträgt. Diese Dispersionen zeigen eine nur geringe Stabilität gegenüber Sedimentation.

WO01/90024 offenbart eine Betonzusammensetzung, welche Aggregate, ein hydraulisches Bindemittel, Kieselsol und ein Polycarboxylat enthält. Die BET-Oberfläche des Kieselsoles beträgt bevorzugt 300 bis 900 $m^2$/g. Kieselsole sind Einzelpartikel mit einem Durchmesser von 3 bis 50 nm und nur in Dispersion beständig. In WO01/90024 wird nichts über den Einfluss des beschriebenen Kieselsols auf die Frühfestigkeit offenbart. Allerdings ist dem Fachmann bekannt, dass bei Kieselsolkonzentrationen, bei denen eine signifikante Steigerung der Frühfestigkeit erreicht wird auch die Verarbeitbarkeit deutlich reduziert wird, so dass hohe Fliessmittelmengen notwendig sind. Es wird vermutet, dass dies daran liegt, dass Kieselsole in den stark alkalischen Zement- oder Betonzusammensetzungen sich rasch lösen. Die Kieselsole stehen damit nur in geringem Umfang als Keim zur Bildung der festigkeitsbildenden Calciumsilikathydrat-Phasen zur Verfügung.

Wagner und Hauck zeigen in Wiss. Z. Hochsch. Archit. Bauwesen. - Weimar 40 (1990), S.183, dass die Reihenfolge der Zugabe von den verschiedenen Bestandteilen bei der Herstellung eines Betons einen wesentlichen Einfluss auf die Frühfestigkeit und den Fliessmittelbedarf hat, wenn frühfestigkeitssteigernde Oxide eingesetzt werden. In der Untersuchung wurde das Oxid getrennt vom Fliessmittel zugegeben.

In der Patentschrift US 5030286 werden 40 - 60%ige Dispersionen bei pH 4 - 8,5 mit einem mittleren Teilchendurchmesser von 0,3 bis 3 $\mu$m beschrieben. Aus den Patentbeispielen geht hervor, dass die Dispersionen nur dann stabil sind, wenn sie zumindest leicht gerührt oder Dispergatoren zur Stabilisierung eingesetzt werden.

Das Patent US 6761867 nennt Dispersionen mit einer mittleren Partikelgröße $d_{50}$ von kleiner 5 $\mu$m. Die Patentbeispiele zeigen jedoch nur Dispersionen, deren mittleren Partikelgröße im $\mu$m-Bereich liegt. Die Deagglomeration erfolgt hier bei pH < 4. Auch hier werden z. T. Dispergatoren zugesetzt. Ferner stellt man bei den Dispersionen nach

US 6761867 bereits nach 10 Tagen Lagerung eine erhebliche Zunahme der Viskosität fest.

Der Stand der Technik zeigt, dass ein regels Interesse besteht, Betonzusammensetzungen zu entwickeln, die eine hohe Frühfestigkeit bei gleichzeitig guter Verarbeitbarkeit aufweisen, ohne dass große Fliessmittelmengen zum Einsatz kommen müssen. Der Stand der Technik zeigt weiter, dass die derzeit zur Verfügung stehenden Fließmittel und Partikel in der Zementbeziehungsweise Betonzusammensetzung ein empfindliches System darstellen. So haben beispielsweise die Reihenfolge der Zugabe und die Konzentration der Einsatzstoffe eine entscheidenden Einfluss auf die Verarbeitbarkeit und die Frühfestigkeit des Betons.

Aus US 2002/014187 A1 ist eine Suspension zur Verwendung in Zementmischungen bekannt, enthaltend Silikasol und Polykarboxylat als Fließmittel.

Aufgabe der Erfindung ist es daher, ein Betonzusatzmittel und ein Verfahren zu dessen Herstellung bereitzustellen, mit dem die Nachteile des Standes der Technik minimiert werden können. Insbesondere soll das Betonzusatzmittel die Frühfestigkeit von Betonen bei gleichzeitig guter Verarbeitbarkeit deutlich erhöhen.

Gegenstand der Erfindung sind Dispersionen, ein Verfahren zu deren Herstellung und deren Verwendung wie sie in den Ansprüchen, der Beschreibung und den Beispielen der vorliegenden Anmeldung definiert und beschrieben werden.

Gegenstand der vorliegenden Erfindung sind insbesondere Dispersionen dadurch gekennzeichnet, dass

- sie zumindest ein gefälltes Siliciumdioxid und wenigstens ein Fließmittel enthalten, wobei das Fließmittel ein Polycarboxylatether ist,
- das zumindest ein gefälltes Siliciumdioxid eine BET-Oberfläche von größer 50 $m^2/a$ aufweist,
- die Aggregate und/oder Agglomerate des gefällten Siliciumdioxids in der Dispersion einen mittleren Durchmesser von weniger als 1 $\mu$m aufweisen und
- der Anteil an Siliciumdioxid 5 bis 50 Gew.-%, bezogen auf die Gesamtmenge der Dispersion, beträgt.

Ein weiterer Gegenstand der Erfindung ist ein Verfahren zur Herstellung der erfindungsgemäßen Dispersion, bei dem man ein gefälltes Siliciumdioxidpulver in einer wässerigen Lösung eines Fließmittels, wobei das Fließmittel ein Polycarboxylatether ist, mittels eines geeigneten Dispergieraggregates dispergiert und nachfolgend gegebenenfalls mit Wasser weiter verdünnt

Ein weiterer Gegenstand der Erfindung ist die Verwendung der erfindungsgemäßen Dispersion als Betonzusatzmittel zur Steigerung der Frühfestigkeit von Betone.

Ein weiterer Gegenstand der Erfindung ist eine Zementhaltige Zubereitung, welche die erfindungsgemäße Dispersion enthält.

Vorzugsweise beträgt der Anteil an Siliciumdioxid in der zementhaitigen Zubereitung 0,01 bis < 2 Gew.-%, bezogen auf den Zement.

Die erfindungsgemäßen Dispersionen zeichnen sich dadurch aus, dass die Frühfestigkeit von Beton verbessert wird.

Die erfindungsgemäßen Dispersionen vereinigen Kieselsäuren und Fließmitteln in einer einzigen Zusammensetzung, wodurch ein Mischen während der Betonzubereitung entfällt, was zu einer vereinfachten und beschleunigten Betonzubereitung führe. Weiterhin wird dadurch die Anzahl an möglichen verschiedenen Abfolgen der Zugabe bei der Herstellung von Betonzubereitungen reduziert, was zu einer Vereinfachung des Prozesses und zu einer Reduzierung von Fehlerquellen führt.

Es wurde ferner festgestellt, dass die erfindungsgemäßen Dispersionen eine gute Lagerstabilität aufweisen. Ohne an eine bestimmte Theorie gebunden zu sein, gründet sich dieser sehr positive Effekt auf einer stabilisierenden Wechselwirkung der Siliciumdioxidpartikel mit dem Fließhilfsmittels. Insbesondere die gute Lagerstabilität ermöglicht überhaupt erst den kommerziellen Einsatz der Dispersionen.

Schließlich hat die Verwendung der erfindungsgemäßen Dispersionen im Vergleich zum jeweils separaten Einsatz von Siliciumdioxidpulvern und Fließmitteln den Vorteil einer deutlich besseren Handhabung. Gegenüber Pulverprodukten ist die Staubfreiheit verbessert und die Dosierung vereinfacht. Ferner wurde durch die erfindungsgemäßen Dispersionen im Vergleich zum Einsatz derselben pulverförmigen Kieselsäure und desselben Fließmittels, jeweils separat, eine Verbesserung der Frühfestigkeit von Beton festgestellt.

In der vorliegenden Erfindung bezeichnen die Begriffe Siliciumdioxid und Siliciumdioxidpartikel den gleichen Stoff. Darunter werden gefällte Kieselsäuren verstanden.

Die Begriffe Kieselsäure, Fällungskieselsäure, gefällte Kieselsäure und gefälltes Siliciumdioxid werden synonym verwendet. In allen Fällen ist darunter gefälltes Siliciumdioxid, wie es zum Beispiel in Ullmann's Encyclopedia of Industrial Chemistry, 5. Auflage, Vol. A23, S. 642-647 beschrieben wird, zu verstehen. Zur Vermeidung reiner Wiederholungen wird der Inhalt dieser Druckschrift hiermit explizit in den Gegenstand und die Beschreibung der vorliegenden Erfindung einbezogen. Gefälltes Siliciumdioxid kann BET-Oberflächen bis zu 800 $m^2/g$ aufweisen und wird durch Reaktion zumindest eines Silicats, bevorzugt eines Alkali- und oder Erdalkalisilicats, mit zumindest einem Säurungsmittel,

bevorzugt zumindest einer Mineralsäure, erhalten. Im Unterschied zu Kieselgelen (siehe Ullmann's Encyclopedia of Industrial Chemistry, 5. Auflage, Vol. A23, S. 629-635) bestehen Fällungskieselsäuren nicht aus einem gleichmäßigen dreidimensionalen $SiO_2$-Netzwerk, sondern aus einzelnen Aggregaten und Agglomeraten. Ein besonderes Merkmal von gefälltem Siliciumdioxid ist der hohe Anteil an so genannter innerer Oberfläche, der sich in einer sehr porösen Struktur mit Makro- und Mesoporen widerspiegelt. Gefällte Kieselsäuren unterscheiden sich von pyrogenen Kieselsäuren, welche auch als Aerosile bezeichnet werten (*siehe* Üllmann's Encyclopedia of Industrial Chemistry, 5. Auflage, Vol. A23, S. 635-642). Pyrogene Kieselsäuren werden mittels Flammenhydrolyse aus Siliciumtetrachlorid gewonnen. Auf Grund des völlig anderen Herstellungsverfahrens weisen pyrogene Kieselsäuren unter anderem eine andere Oberflächenbeschaffenheit auf als gefällte Kieselsäuren. Dies drückt sich z. B. in der niedrigeren Zahl von Silanolgruppen auf der Oberfläche aus. Das Verhalten von pyrogenen Kieselsäuren und gefällten Kieselsäuren und somit auch deren Verhalten in wässrigen Dispersionen, wird hauptsächlich durch die Oberflächeneigenschaften bestimmt. Daher können diese nicht miteinander verglichen werden. Gefällte Kieselsäuren weißen ggü. pyrogenen Kieselsäuren unter anderem den Vorteil auf, dass sie wesentlich preisgünstiger sind.

Unter Kieselsolen sind Partikel gemäß Winnacker, Küchler, 5. Auf1., Band 3, S. 868 zu verstehen. Im Gegensatz zu Kieselsolen, in denen die Kieselsäurepartikel als Primärpartikel vorliegen, handelt es sich bei den Partikeln der erfindungsgemäßen Kieselsäuredispersionen um Sekundärpartikel, d.h. um aggregierte Primärpartikel.

Die erfindungsgemäßen Dispersionen sind bevorzugt wässrige Dispersionen, d. h., mindestens ein Bestandteil, besonders bevorzugt der Hauptbestandteil, der flüssigen Phase ist Wasser, vorzugsweise entionisiertes Wasser. Außer Wasser und zumindest einem Siliciumdioxide enthalten erfindungsgemäßen Dispersionen in der flüssigen Phase darüber hinaus mindestens ein Fließhilfsmittel. In einer besonders bevorzugten Ausführungsform enthalten die erfindungsgemäßen Dispersionen ansonsten keine weiteren flüssigen Zusatzstoffe, speziell nicht solche, die die Sedimentation der Siliciumdioxidpartikel verhindern.

Die erfindungsgemäße Dispersionen sind bevorzugt frei von Bindemitteln. Dabei sind unter Bindemitteln anorganische Stoffe, wie beispielsweise Zement, oder organische Stoffe zu verstehen, die im plastischen Zustand verarbeitbar sind, und im Lauf einer bestimtem Zeit erhärten und dadurch andere Stoffe miteinander verbinden.

Ferner sind die erfindungsgemäßen Dispersionen bevorzugt frei von anorganischen Dispergatoren und mechanischen Stabilisatoren wie z.B. Latex.

Es ist weiterhin möglich, dass die erfindungsgemäße Dispersion das gefällte Siliciumdioxid als einzigen Feststoff enthält. Dies kann insbesondere dann sinnvoll sein, wenn die Dispersion als Masterbatch für verschiedene Anwendungen dienen soll.

Bevorzugt liegt die BET-Oberfläche der in des erfindungsgemäßen Dispersion vorliegenden Siliciumdioxids im Falle einer gefällten Kieselsäuren im Bereich von 50 - 800 $m^2/g$, bevorzugt 50 - 500 $m^2g$, besonders bevorzugt im Bereich von 100 - 400 $m^2/g$, und ganz besonders bevorzugt im Bereich von 150 - 250 $m^2/g$.

Sollten in den erfindungsgemäßen Dispersionen mehrere Siliciumdioxide nebeneinander vorliegen, so wird die BET-Oberfläche auf die Gesamtoberfläche die durch die Siliciumdioxide insgesamt gebildet wird bezogen. In diesem Fall liegt die BET vorzugsweise im Bereich von 50 - 800 $m^2/g$, besonders bevorzugt 50 - 500 $m^2g$, ganz besonders bevorzugt im Bereich von 70 - 500 $m^2/g$, und insbesondere bevorzugt im Bereich von 70 - 250 $m^2/g$.

Durch den Einfluss der im Vergleich zu Kieselsole vorhandenen inneren Oberfläche und der im Vergleich zu Microsilica vergrößerten äußeren Oberfläche der in der erfindungsgemäßen Dispersion enthaltenen Siliciumdioxide wird die Frühfestigkeit der Betonzubereitungen deutlich verbessert.

Für die erfindungsgemäße Dispersion sind für den mittleren Durchmesser $d_{50}$ der Aggregate und/oder Agglomerat in der Dispersion folgende Vorzugsbereiche zu nennen: von 50 bis 900 nm, von 50 bis 750 nm, von 100 bis 500 nm und von 150 bis 350 nm. Werte unterhalb von 50 nm sind technisch nur schwierig zu realisieren und weisen in der Anwendung keine Vorteile mehr auf. Durch die Reduktion der mittleren Partikelgröße im Vergleich zu Dispersionen des Standes der Technik wird die Lagerstabilität der erfindungsgemäßen Dispersionen deutlich verbessert. Gleichzeitig wird dadurch bewirkt, dass in der gleichen gewichtsmäßigen Menge Siliciumdioxid eine größere Anzahl einzelner Partikel vorhanden ist, so dass dadurch mehr Keime zur Bildung der festigkeitsbildenden Calciumsilikathydrat-Phasen zur Verfügung stehen und somit die Frühfestigkeit von Betonzubereitungen weiter verbessert wird.

Der Anteil an gefälltem Siliciumdioxid in der erfindungsgemäßen Dispersion beträgt 5 bis 50 Gew.-%, bezogen auf die Gesamtmenge der Dispersion. Erfindungsgemäße Dispersionen, die einen Siliciumdioxidgehalt von 10 bis 50 Gew.-%, bevorzugt von 20 bis 40 Gew.-%, besonders bevorzugt von 20 bis 35 Gew.-% und ganz besonders bevorzugt von 25 bis 35 Ges.-% aufweisen, zeigen in der Regel eine bessere Stabilität als höher gefüllte Dispersionen. Dispersionen mit weniger als 5 Gew.-% Siliciumdioxid sind aufgrund des hohen Wassergehaltes nicht wirtschaftlich.

Die erfindungsgemäßen Dispersionen weisen bevorzugt einen pH-Wert von 8 bis 12, bevorzugt von 8,5 bis 10, besonders bevorzugt 8,8 bis 10 und insbesondere bevorzugt 9 bis 10 auf. Es hat nämlich herausgestellt, dass der pH-Wert der Dispersionen nicht zu niedrig sein sollte. Der pH-Wert der erfindungsgemäßen Dispersionen wirkt sich insbesondere stabilisierend auf die Sedimentationseigenschaften der Dispersion aus.

Die erfindungsgemäße Dispersion enthält zumindest ein Fließmittel. Geeignete Fließmittel können sein: Ligninsulfonat, sulfonierte Naphtalin-Formaldehyd Polykondensate (vgl. EP0214 412), sulfonierte MelaminFormaldehyd-Polykondensate (vgl. DE1671017) sowie Polycarboxylatether (vgl. US5707445, EP1110981, EP1142847). Der Inhalt der zitierten Patentschriften wird hiermit explizit in den Inhalt der vorliegenden Anmeldung einbezogen.

Bevorzugt handelt es sich dabei um einen wasserlöslichen Polxycarboxylatether in Form eines Copolymers, welches aus polyoxyalkylenhaltigen Strukturbausteinen und Carbonsäure-und/oder Carbonsäureanhydrid-Monomeren sowie ggf. weiteren Monomeren aufgebaut ist.

Die erfindungsgemäße Dispersion kann ein Copolymeres mit den Baugruppen a), b), c), vorzugsweise mit den Baugruppen a), b), c), und d) enthalten. Dabei ist der Anteil der Baugruppe a) 51 bis 95 Mol-%, der Baugruppe b) 1 bis 48,9 9 Mol-%, der Baugruppe c) 0,1 1 bis 5 Mol-% und der Baugruppe d) 0 bis 47,9 Mol-%.

Die erste Baugruppe a) stellt ein Mono- oder Dicarbonsäure-Derivat mit der allgemeinen Formel Ia, Ib oder Ic dar.

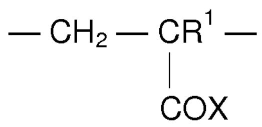

Ia

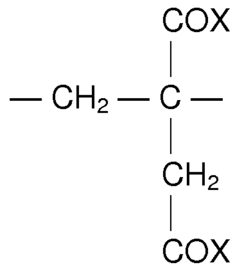

Ib

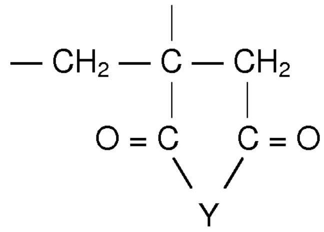

Ic

Beim Monocarbonsäure-Derivat Ia bedeutet $R^1$ Wasserstoff oder einen aliphatischen Kohlenwasserstoffrest mit 1 bis 20 C-Atomen, vorzugsweise eine Methylgruppe. X in den Strukturen Ia und Ib steht für - $OM_a$ und/oder - O - $(C_mH_{2m}O)_n$-$R^2$ bzw. -NH-$(C_mH_{2m}O)$n -$R^2$ mit folgender Bedeutung für M, a, m, n und $R^2$:

M bedeutet Wasserstoff, ein ein- oder zweiwertiges Metallkation, Ammonium, ein organischer Aminrest sowie a = ½ oder 1, je nachdem, ob es sich bei M um ein ein- oder zweiwertiges Kation handelt. Als organische Aminreste werden vorzugsweise substituierte Ammonium-Gruppen eingesetzt, die sich ableiten von primären, sekundären oder tertiären $C_1$-$_{20}$-Alkylaminen, $C_1$-$_{20}$-Alkanolaminen, $C_5$-$_3$-Cycloalkylaminen und $C_8$-$_{14}$-Arylaminen. Beispiele für die entsprechenden Amine sind Methylamin, Dimethylamin, Trimethylamin, Ethanolamin, Diethanolamin, Triethanolamin, Methyldiethanolamin, Cyclohexylamin, Dicyclohexylamin, Phenylamin, Diphenylamin in der protonierten (Ammonium)Form.

$R^2$ bedeutet Wasserstoff, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, m = 2 bis 4 sowie n = 0 bis 200 sein kann. Die aliphatischen Kohlenwasserstoffe können hierbei linear oder verzweigt sowie gesättigt oder ungesättigt sein. Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können.

Anstelle des oder neben dem Dicarbonsäure-Derivat gemäß Formel Ib kann die Baugruppe a) (Mono- oder Dicarbonsäure-Derivat) auch in cyclischer Form entsprechend Formel Ic vorliegen, wobei Y = O (Säureanhydrid) oder $NR^2$ (Säureimid) darstellen kann mit der oben bezeichneten Bedeutung für $R^2$.

Die zweite Baugruppe b) entspricht Formel II

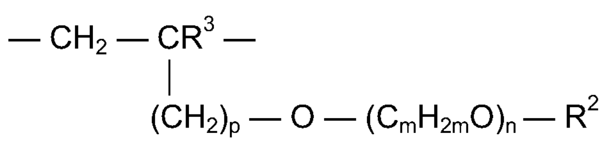

II

und leitet sich von Oxyalkylenglykol-Alkenylethern ab, in der m, n und $R^2$ die oben bezeichnete Bedeutung besitzen. $R^3$ bedeutet wiederum Wasserstoff oder einen aliphatischen Kohlenwasserstoffrest mit 1 bis 5 C-Atomen, der ebenfalls linear oder verzweigt bzw. auch ungesättigt sein kann. p kann Werte zwischen 0 und 3 annehmen.

Gemäß den bevorzugten Ausführungsformen bedeuten in den Formeln Ia, Ib und II m = 2 und/oder 3, so dass es sich um Polyalkylenoxid-Gruppen handelt, die sich von Polyethylenoxid und/oder Polypropylenoxid ableiten. In einer

weiteren bevorzugten Ausführungsform bedeutet p in Formel II 0 oder 1, d. h. es handelt sich um Vinyl- und/oder Alkylpolyalkoxylate.

Die dritte Baugruppe c) entspricht der Formel IIIa oder IIIb

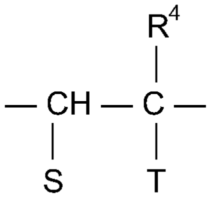

IIIa

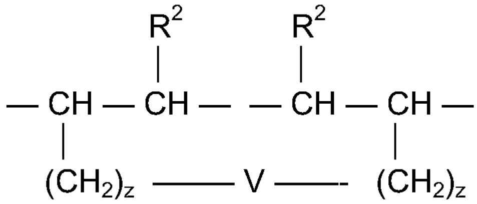

IIIb

In Formel IIIa kann $R^4$ = H oder $CH_3$ sein, je nachdem es sich um Acryl- oder Methacrylsäure-Derivate handelt. S kann hierbei -H, $-COOM_a$ oder $-COOR^5$ bedeuten, wobei a und M die oben erwähnte Bedeutung besitzen und $R^5$ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen sein kann. Der aliphatische Kohlenwasserstoffrest kann ebenfalls linear oder verzweigt, gesättigt oder ungesättigt sein. Die bevorzugten cycloaliphatischen Kohlenwasserstoffreste sind wiederum Cyclopentyl- oder Cyclohexylreste und die bevorzugten Arylreste Phenyl- oder Naphthylreste. Im Falle von T = $-COOR^5$ ist S = $COOM_a$ oder $-COOR^5$. Für den Fall, dass T und S = $COOR^5$ sind, leiten sich die entsprechenden Baugruppen von den Dicarbonsäureestern ab.

Neben diesen Esterstruktureinheiten können die Baugruppen c) noch andere hydrophobe Strukturelemente besitzen. Hierzu gehören die Polypropylenoxid- bzw. Polypropylenoxid-Polethylenoxid-Derivat mit

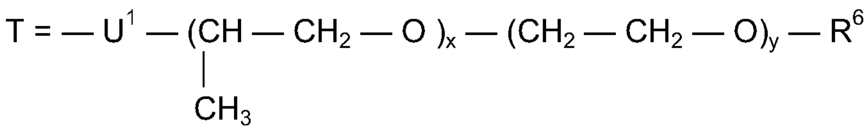

x nimmt hierbei einen Wert von 1 bis 150 und y von 0 bis 15 an. Die Polypropylenoxid(-Polyethylenoxid-)-Derivate können hierbei über eine Gruppierung $U^1$ mit dem Ethylrest der Baugruppe c) entsprechend Formel IIIa verknüpft sein, wobei $U^1$ = -CO-NH-, -O- oder $-CH_2-O-$ sein kann. Hierbei handelt es sich um die entsprechenden Amid-, Vinyl- oder Allylether der Baugruppe entsprechend Formel IIIa. $R^6$ kann hierbei wiederum $R^2$ (Bedeutung von $R^2$ siehe oben) oder

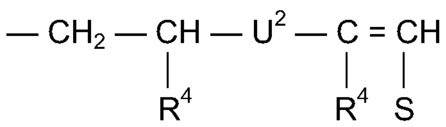

sein, wobei $U^2$ = -NH-CO-, -O-, oder $-OCH_2-$ bedeuten kann und S die oben beschriebene Bedeutung besitzt. Diese Verbindungen stellen Polypropylenoxid(-Polyethylenoxid-)-Derivate von den bifunktionellen Alkenylverbindungen entsprechend Formel IIIa dar.

Als weiteres hydrophobes Strukturelement können die Verbindungen entsprechend Formel IIIa Polydimethylsiloxan-Gruppen enthalten, was im Formelschema IIIa T = - W - $R^7$ entspricht.

W bedeutet hierbei

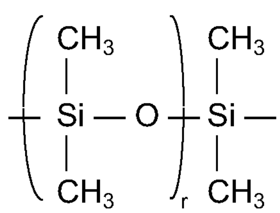

(nachfolgend Polydimethylsiloxan Gruppierung genannt), $R^7$ kann = $R^2$ sein und r kann hierbei Werte von 2 bis 100 annehmen. Die Polydimethylsiloxan-Gruppierung kann nicht nur direkt an den Ethylenrest gemäß Formel IIIa gebunden

sein, sondern auch noch über die Gruppierungen

$-CO-[NH-(CH_2)_3]_s,-W-R^7$ oder $-CO-O(CH_2)_z-W-R^7$,

wobei $R^7$ vorzugsweise = $R^2$ bedeutet und s = 1 oder 2 und z = 0 bis 4 sein können. $R^7$ kann außerdem noch

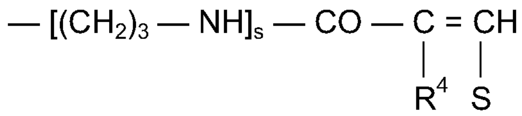

oder

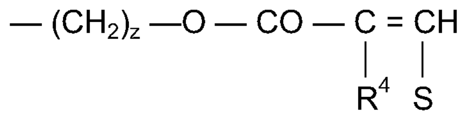

Hierbei handelt es sich um die entsprechenden difunktionellen Ethylenverbindungen entsprechend der Formel IIIa, die über die entsprechenden Amid- oder Estergruppierungen miteinander verknüpft sind und wobei nur eine Ethylengruppe copolymerisiert wurde.

Ähnlich verhält es sich auch mit den Verbindungen gemäß Formel IIIa mit T = $(CH_2)_z-V-(CH_2)_z-CH=CH-R^2$, wobei z = 0 bis 4, V entweder ein Polydimethylsiloxan-Rest W oder ein - $O-CO-C_6H_4-CO-O$-Rest sein kann und $R^2$ die oben angegebene Bedeutung besitzt. Diese Verbindungen leiten sich von den entsprechenden Dialkenyl-phenyl-dicarbonsäureestern oder Dialkenyl-polydimethylsiloxan-Derivaten ab.

Es ist im Rahmen der vorliegenden Erfindung auch möglich, dass nicht nur eine, sondern beide Ethylengruppen der difunktionellen Ethylenverbindungen copolymerisiert wurden. Dies entspricht im Wesentlichen den Baugruppen entsprechend der Formel IIIb

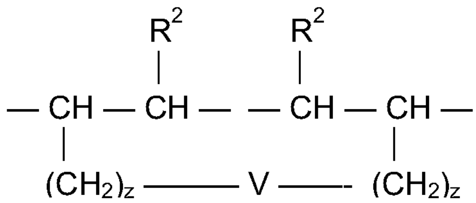

IIIb

wobei $R^2$, V und z die bereits beschriebene Bedeutung besitzen.

Die vierte Baugruppe d) leitet sich ab von einem ungesättigten Dicarbonsäure-Derivat der allgemeinen Formel IVa und/oder IVb mit der oben angegebenen Bedeutung für a, M, X und Y.

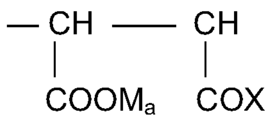

IVa

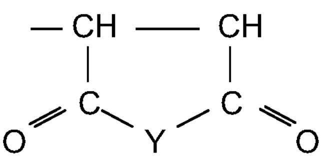

IVb

Vorzugsweise enthalten die Copolymere 55 bis 75 Mol-% Baugruppen der Formel Ia und/oder Ib, 19,5 bis 39,5 Mol-% Baugruppen der Formel II, 0,5 bis 2 Mol-% Baugruppen der Formel IIIa und/oder IIIb und 5 bis 20 Mol-% Baugruppen der Formel IVa und/oder IVb.

Gemäß einer bevorzugten Ausführungsform enthalten die erfindungsgemäßen Copolymere zusätzlich noch bis zu 50 Mol%, insbesondere bis zu 20 Mol-% bezogen auf die Summe der Baugruppen a bis d, Strukturen, die auf Monomeren auf Basis von Vinyl- oder (Meth-)Acrylsäure-Derivaten wie Styrol, Methylstyrol, Vinylacetat, Vinylpropionat, Ethylen, Propylen, Isobuten, Hydroxyalkyl(meth)acrylate, Acrylamid, Methacrylamid, N-Vinylpyrrolidon, Allylsulfonsäure, Methallylsulfonsäure, Vinylsulfonsäure, Vinylphosphonsäure, AMPS, Methylmethacrylat, Methylacrylat, Butylacrylat, Allylhexylacrylat u.a. beruhen.

Die Anzahl der sich wiederholenden Struktureinheiten in den Copolymeren ist nicht eingeschränkt. Als besonders vorteilhaft hat es sich jedoch erwiesen, mittlere Molekulargewichte von 1 000 bis 100 000 g/Mol einzustellen.

Die Herstellung der Copolymere kann auf verschiedenen Wegen erfolgen. Wesentlich ist hierbei, dass man 51 bis 95 Mol-% eines ungesättigten Mono- oder Dicarbonsäure-Derivats, 1 bis 48,9 Mol-% eines Oxyalkylen-Alkenylethers, 0,1 bis 5 Mol-% einer vinylischen Polyalkylenglykol-, Polysiloxan- oder Esterverbindung und 0 bis 55 Mol-% eines Dicarbonsäure-Derivates mit Hilfe eines radikalischen Starters polymerisiert.

Als ungesättigte Mono- oder Dicarbonsäure-Derivate, welche die Baugruppen der Formel Ia, Ib bzw. Ic bilden, werden vorzugsweise eingesetzt: Acrylsäure, Methacrylsäure, Itaconsäure, Itaconsäureanhydrid, Itaconsäureimid und Itaconsäuremonoamid.

Anstelle von Acrylsäure, Methacrylsäure, Itaconsäure und Itaconsäuremonoamid können auch deren ein- oder zweiwertige Metallsalze, vorzugsweise Natrium-, Kalium-, Calcium- oder Ammoniumsalze verwendet werden.

Als Acryl-, Methacryl- oder Itaconsäureester werden vor allem Derivate verwendet, deren alkoholische Komponente ein Polyalkylenglykol der allgemeinen Formel $HO-(C_mH_{2m}O)_n-R^2$ ist mit $R^2$ = H, aliphatischer Kohlenwasserstoffrest mit 1 bis 20 C-Atomen, cycloaliphatischer Kohlenwasserstoffrest mit 5 bis 8 C-Atomen, ggf. substituierter Arylrest mit 6 bis 14 C-Atomen sowie m = 2 bis 4 und n = 0 bis 200.

Die bevorzugten Substituenten am Arylrest sind -OH-, -COO-oder $-SO_3$-Gruppen.

Die ungesättigten Monocarbonsäure-Derivate können nur als Monoester vorliegen, während im Falle der Dicarbonsäure Itaconsäure auch Diesterderivate möglich sind.

Die Derivate der Formel Ia, Ib und Ic können auch als Mischung von veresterten und freien Säuren vorliegen und werden in einer Menge von vorzugsweise 55 bis 75 Mol-% verwendet.

Die zweite Komponente zur Herstellung der erfindungsgemäßen Copolymeren stellt ein Oxyalkylenglykol-Alkenylether dar, der vorzugsweise in einer Menge von 19,5 bis 39,5 Mol-% eingesetzt wird. Bei den bevorzugten Oxyalkylenglykol-Alkenylethern entsprechend der Formel V

$$CH_2 = CR^3 - (CH_2)_p - O - (C_mH_{2m}O)_n - R^2 \qquad \text{V}$$

bedeuten $R^3$ = H oder ein aliphatischer Kohlenwasserstoffrest mit 1 bis 5 C-Atomen und p = 0 bis 3. $R^2$, m und n besitzen die bereits oben genannte Bedeutung. Als besonders vorteilhaft hat sich hierbei die Verwendung von Polyethylenglykolmonovinylether (p = 0 und m = 2) erwiesen, wobei n vorzugsweise Werte zwischen 1 und 50 besitzt.

Als dritte Komponente zur Einführung der Baugruppe c) wird vorzugsweise 0,5 bis 2 Mol-% einer vinylischen Polyalkylenglykol-, Polysiloxan- oder Ester-Verbindung eingesetzt. Als bevorzugte vinylische Polyalkylenglykol-Verbindung werden Derivate entsprechend der Formel VI verwendet,

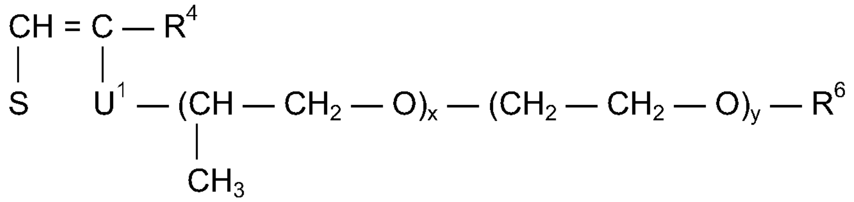
VI

wobei S vorzugsweise -H, oder $COOM_a$ und $U^1$ = -CO-NH-, -O-oder $-CH_2O-$ sein können, d. h. es handelt sich um die Säureamid-, Vinyl- oder Allylether der entsprechenden Polypropylenglykol- bzw. Polypropylenglykol-Polyethylenglykol-Derivate. Die Werte für x sind 1 bis 150 und für y = 0 bis 15. $R^6$ kann entweder wiederum $R^1$ sein oder

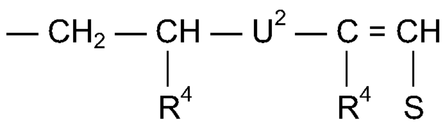

bedeuten, wobei $U^2$ = -NH-CO-, -O- sowie $-OCH_2-$ und S =$-COOM_a$ und vorzugsweise -H ist.

Im Falle von $R^6 = R^2$ und $R^2$ vorzugsweise H handelt es sich um die Polypropylenglykol(-Polyethylenglykol)-Monamide bzw. Ether der entsprechenden Acryl- (S = H, $R^4$ = H), Methacryl-(S = H, $R^4 = CH_3$) oder Maleinsäure- (S = $COOM_a$, $R^4$ = H)-Derivate. Beispiele für solche Monomere sind Maleinsäure-N-(methylpolypropylenglykol-)monoamid, Maleinsäure-N-(methoxy-polypropylenglykol-polyethylenglykol-) monoamid, Polypropylenglykol-vinylether und Polypropylenglykolallylether.

Im Falle von $R^6 \neq R^2$ handelt es sich um bifunktionelle Vinylverbindungen, deren Polypropylenglykol-(Polyethylenglykol-)Derivate über Amid- oder Ethergruppen (-O- bzw. $-OCH_2-$) miteinander verbunden sind. Beispiele für solche Verbindungen sind Polypropylenglykol-bismaleinamidsäure, Polypropylenglykoldiacrylamid, Polypropylenglykoldimethacrylamid, Polypropylenglykoldivinylether, Polypropylenglykoldiallylether.

Als bevorzugte vinylische Polysiloxan-Verbindung werden Derivate entsprechend der Formel VII verwendet,

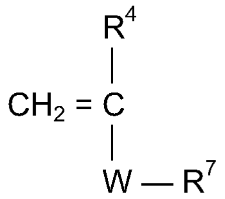

VII

wobei $R^4$ = - H und $CH_3$,

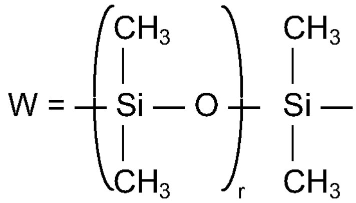

und r = 2 bis 100 und $R^7$ bevorzugt = $R^1$ ist. Beispiele für solche Monomere sind Monovinylpolydimethylsiloxane.

Als weitere vinylische Polysiloxan-Verbindung kommen Derivate entsprechend der Formel VIII in Frage,

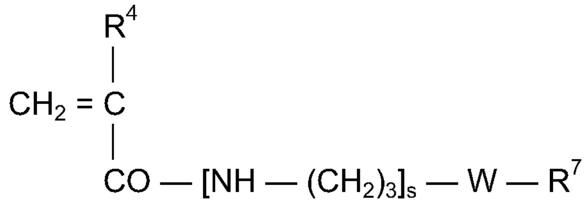

VIII

wobei s = 1 oder 2 sein kann, $R^4$ und W die oben genannte Bedeutung besitzen und $R^7$ entweder = $R^2$ oder aber

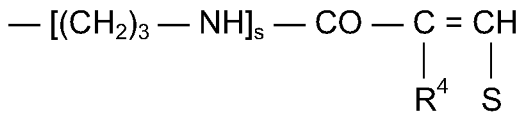

sein kann und S vorzugsweise Wasserstoff darstellt.

Beispiele für solche Monomere mit einer Vinylfunktion ($R^7$ = $R^2$) sind Polydimethylsiloxanpropylmaleinamidsäure oder Polydimethylsiloxandipropylenaminomaleinamidsäure. Im Falle von $R^7 \neq R^2$ handelt es sich um Divinylverbindungen wie z. B. Polydimethylsiloxan-bis-(propylmaleinamidsäure) oder Polydimethylsiloxan-bis-(dipropylenaminomaleinamidsäure).

Als weitere vinylische Polysiloxan-Verbindung kommt ein bevorzugtes Derivat entsprechend der Formel in Frage:

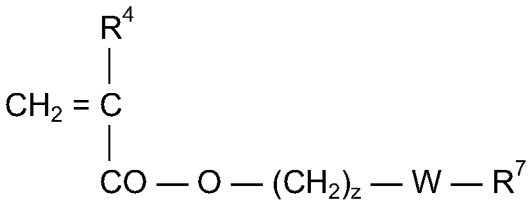

IX

wobei z 0 bis 4 sein kann und $R^4$ bzw. W die oben genannte Bedeutung besitzen. $R^7$ kann entweder $R^2$ oder aber

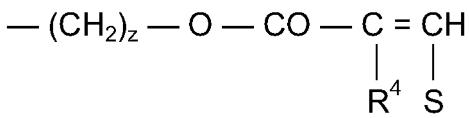

sein, wobei S bevorzugt Wasserstoff bedeutet. Beispiele für solche monovinylischen Verbindungen ($R^7 = R^1$) sind Polydimethylsiloxan-(1-propyl-3-acrylat) oder Polydimethylsiloxan-(1-propyl-3-methacrylat).

Im Falle von $R^7 \neq R^2$ handelt es sich um Divinylverbindungen wie z. B. Polydimethylsiloxan-bis-(1-propyl-3-acrylat) oder Polydimethylsiloxan-bis-(1-propyl-3-methacrylat).

Als vinylische Esterverbindung im Rahmen der vorliegenden Erfindung werden vorzugsweise Derivate entsprechend der Formel X eingesetzt,

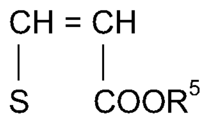

X

wobei S = $COOM_a$ oder - $COOR^5$ bedeuten und $R^5$ ein aliphatischer Kohlenwasserstoffrest mit 3 bis 20 C-Atomen, ein cycloaliphatischer Kohlenwasserstoffrest mit 5 bis 8 C-Atomen sowie ein Arylrest mit 6 bis 14 C-Atomen sein kann. a und M besitzen die oben genannte Bedeutung. Beispiele für solche Esterverbindungen sind Di-n-butylmaleinat bzw. -fumarat oder Mono-n-butylmaleinat- bzw. -fumarat.

Des Weiteren können auch Verbindungen entsprechend der Formel XI eingesetzt werden

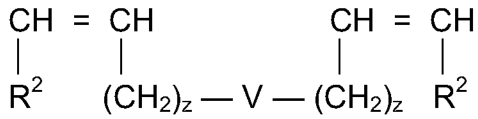

XI

wobei z wiederum 0 bis 4 sein kann und $R^2$ die bereits bekannte Bedeutung besitzt. V kann hierbei W (also eine Polydimethylsiloxan-Gruppierung) sein, was einer Dialkenylpolydimethylsiloxan-Verbindung wie z.B. Divinylpolydimethylsiloxan entspricht. Alternativ hierzu kann V auch $-O-CO-C_6H_4-CO-O-$ sein. Diese Verbindungen stellen Dialkenylphthalsäure-Derivate dar. Ein typisches Beispiel für solche Phthalsäure-Derivate ist Diallylphthalat.

Die Molekulargewichte der Verbindungen, welche die Baugruppe c) bilden, können in weiten Grenzen variiert werden und liegen vorzugsweise zwischen 150 und 10 000.

Als vierte Komponente zur Herstellung der Copolymere können vorzugsweise 5 bis 20 Mol-% eines ungesättigten Dicarbonsäure-Derivats (XII) verwendet werden:

$$M_aOOC - CH = CH - COX \qquad XII$$

mit der bereits angegebenen Bedeutung für a, M und X.

Für den Fall X = $OM_a$ leitet sich das ungesättigte Dicarbonsäure-Derivat ab von Maleinsäure, Fumarsäure, ein- oder zweiwertige Metallsalze dieser Dicarbonsäuren, wie dem Natrium-, Kalium-, Calcium- oder Ammoniumsalz bzw. Salze mit einem organischen Aminrest. Außerdem verwendete Monomere, welche die Einheit Ia bilden, sind Polyalkylenglykolmonoester der oben genannten Säuren mit der allgemeinen Formel XIII:

$$M_aOOC - CH = CH - COO - (C_mH_2mO)_n - R^2$$

aufweisen, mit der bereits angegebenen Bedeutung für a, m, n und $R^2$.

Die vierte Komponente kann sich auch ableiten von den ungesättigten Dicarbonsäureanhydriden und Imiden der allgemeinen Formel XIV (5 bis 20 Mol-%)

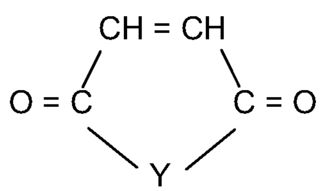

XIV

mit der oben angegebenen Bedeutung für Y.

Erfindungsgemäß können nach einer bevorzugten Ausführungsform noch bis zu 50, vorzugsweise bis zu 20 Mol-% auf die Summe der Baugruppen a) bis d) bezogen weitere Monomere wie oben beschrieben eingesetzt werden.

Die erfindungsgemäße Dispersion kann weiterhin ein Copolymeres enthalten, dessen Basis ein Oxyalkenylglykolalkenylether ist und das Copolymere die Baugruppen a), b) und c) enthält. Dabei ist der Anteil der Baugruppe a)

10 bis 90 Mol-%, der Baugruppe b) 1 bis 89 Mol-%, der Baugruppe c) 0,1 bis 5 Mol-% und der Baugruppe d) 0,1 bis 10 Mol-%.

Die erste Baugruppe a) stellt ein ungesättigtes Dicarbonsäure-Derivat entsprechend der Formel IVa oder IVb dar.

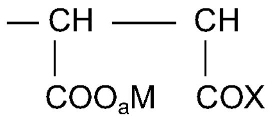

IVa

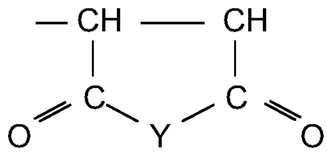

IVb

Beim Dicarbonsäure-Derivat entsprechend Formel Id bedeutet M = Wasserstoff, ein ein- oder zweiwertiges Metallkation, Ammoniumion, ein organischer Aminrest, sowie a = 1, oder für den Fall, dass es sich bei M um ein zweiwertiges Kation handelt, 1/2. Es ergibt sich dann zusammen mit einer ebenfalls $M_a$ mit a = 1/2 enthaltenden Gruppierung eine Verbrückung über M, welches als $M_a$ mit a = 1/2 nur theoretisch existiert.

Als ein- oder zweiwertiges Metallkation finden vorzugsweise Natrium-, Kalium-, Calcium- oder Magnesiumionen Verwendung. Als organische Aminreste werden vorzugsweise substituierte Ammoniumgruppen eingesetzt, die sich ableiten von primären, sekundären oder tertiären $C_1$- bis $C_{20}$-Alkylaminen, $C_1$- bis $C_{20}$-Alkanolaminen, $C_5$- bis $C_8$-Cycloalkylaminen und $C_6$- bis $C_{14}$-Arylaminen. Beispiele für entsprechende Amine sind Methylamin, Dimethylamin, Trimethylamin, Ethanolamin, Diethanolamin, Triethanolamin, Cyclohexylamin, Dicyclohexylamin, Phenylamin, Diphenylamin in der protonierten (Ammonium)-Form. Außerdem bedeutet X ebenfalls $-OM_a$ oder $-O-(C_mH_{2m}O)_n-R^1$ wobei $R^1$ H, ein aliphatischer Kohlenwasserstoffrest mit 1 bis 20 C-Atomen, ein cycloaliphatischer Kohlenwasserstoffrest mit 5 bis 8 C-Atomen, ein Arylrest mit 6 bis 14 C-Atomen, der ggf. noch substituiert sein kann, m = 2 bis 4 sowie n = 0 bis 200 sein kann. Die aliphatischen Kohlenwasserstoffreste können hierbei linear oder verzweigt sowie gesättigt oder auch ungesättigt sein.

Als bevorzugte Cycloalkylreste sind Cyclopentyl- oder Cyclohexylreste, als bevorzugte Arylreste Phenyl- oder Naphthylreste anzusehen, die insbesondere noch durch Hydroxyl-, Carboxyl- oder Sulfonsäuregruppen substituiert sein können. Alternativ hierzu kann X noch $-NHR^2$ und/oder - $NR^2_2$ bedeuten, was den mono- oder disubstituierten Monoamiden der entsprechenden ungesättigten Dicarbonsäure entspricht, wobei $R^2$ wiederum mit $R^1$ identisch sein kann oder stattdessen $-CO-NH_2$ bedeuten kann.

Anstelle des Dicarbonsäure-Derivates entsprechend Formel IVa kann die Baugruppe a) (Dicarbonsäure-Derivat) auch in cyclischer Form entsprechend der Formel IVb vorliegen, wobei Y = O (= Säureanhydrid) oder $NR^2$ (Säureimid) darstellen kann und $R^2$ die oben bezeichnete Bedeutung besitzt.

In der zweiten Baugruppe entsprechend der Formel II,

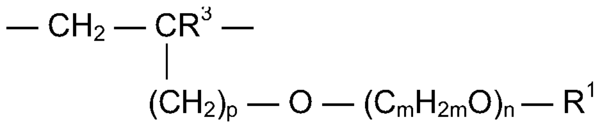

II

die sich von den Oxyalkylenglykol-Alkenylethern ableitet, bedeuten $R^3$ wiederum Wasserstoff oder ein aliphatischer Kohlenwasserstoffrest mit 1 bis 5 C-Atomen (der ebenfalls linear oder verzweigt bzw. auch ungesättigt sein kann). p kann Werte zwischen 0 und 3 annehmen und $R^2$, m und n besitzen die oben genannte Bedeutung. Gemäß einer bevorzugten Ausführungsform bedeuten in Formel II p = 0 und m = 2 oder 3, so dass es sich um Baugruppen handelt, die sich vom Polyethylenoxid- oder Polypropylenoxid-Vinylether ableiten.

Die dritte Baugruppe c) entspricht der Formel IIIa oder IIIb

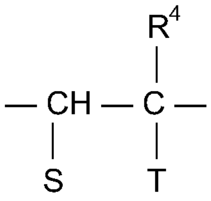

IIIa

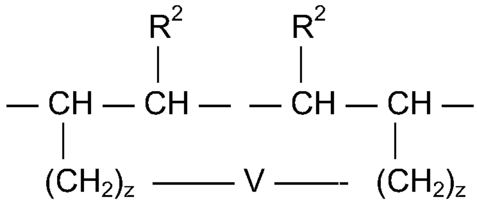

IIIb

In Formel IIIa kann $R^4$ = H oder $CH_3$ sein, je nachdem ob es sich um Acryl- oder Methacrylsäure-Derivate handelt. S kann hierbei -H, $COOM_a$ oder $-COOR^5$ bedeuten, wobei a und M die oben erwähnte Bedeutung besitzen und $R^5$ ein aliphatischer Kohlenwasserstoffrest mit 3 bis 20 C-Atomen, ein cycloaliphatischer Kohlenwasserstoffrest mit 5 bis 8 C-Atomen oder ein Arylrest mit 6 bis 14 C-Atomen sein kann. Der aliphatische Kohlenwasserstoffrest kann ebenfalls linear oder verzweigt, gesättigt oder ungesättigt sein. Die bevorzugten cycloaliphatischen Kohlenwasserstoffreste sind wiederum Cyclopentyl- oder Cyclohexylreste und die bevorzugten Arylreste Phenyl- oder Naphthylreste. Im Falle von T = $-COOR^5$ ist S = $COOM_a$ oder $-COOR^5$. Für den Fall, dass T und S = $COOR^5$ sind, leiten sich die entsprechenden Baugruppen von den Dicarbonsäureestern ab.

Neben diesen Esterstruktureinheiten können die Baugruppen c) noch andere hydrophobe Strukturelemente besitzen. Hierzu gehören die Polypropylenoxid- bzw. Polypropylenoxid-Polyethylenoxid-Derivate mit

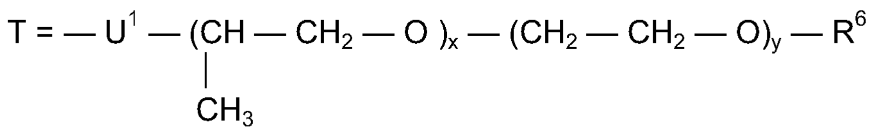

x nimmt hierbei einen Wert von 1 bis 150 und y von 0 bis 15 an. Die Polypropylenoxid(-Polyethylenoxid-)-Derivate können hierbei über eine Gruppierung $U^1$ mit dem Ethylrest der Baugruppe c) entsprechend Formel IIIa verknüpft sein, wobei $U^1$ = - CO-NH-, -O- oder $-CH_2-O-$ sein kann. Hierbei handelt es sich um die entsprechenden Amid-, Vinyl- oder Allylether der Baugruppen entsprechend Formel IIIa. $R^6$ kann hierbei wiederum $R^1$ (Bedeutung von $R^1$ siehe oben) oder

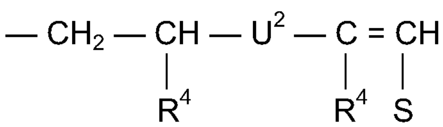

sein, wobei $U^2$ = -NH-CO-, -O- oder $-OCH_2-$ bedeuten kann und S die oben beschriebene Bedeutung besitzt. Diese Verbindungen stellen Polypropylenoxid(-Polyethylenoxid-)-Derivate von den bifunktionellen Alkenylverbindungen entsprechend Formel IIIa dar.

Als weiteres hydrophobes Strukturelement können die Verbindungen entsprechend Formel IIIa Polydimethylsiloxan-Gruppen enthalten, was im Formelschema IIIa T = $-W-R^7$ entspricht.

W bedeutet hierbei

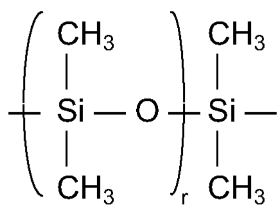

(nachfolgend Polydimethylsiloxan-Gruppierung genannt), $R^7$ kann = $R^1$ sein und r kann hierbei Werte von 2 bis 100 annehmen. Die Polydimethylsiloxan-Gruppierung W kann nicht nur direkt an den Ethylenrest gemäß Formel IIIa gebunden sein, sondern auch noch über die Gruppierungen

$$-CO-[NH-(CH_2)_3]_s-W-R^7 \text{ oder } -CO-O(CH_2)_z-W-R^7,$$

wobei $R^7$ vorzugsweise = $R^1$ bedeutet und s = 1 oder 2 und z = 0 bis 4 sein können.

$R^7$ kann außerdem noch

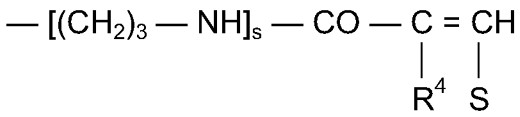

oder

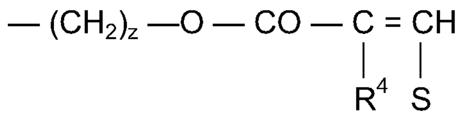

sein. Hierbei handelt es sich um die entsprechenden difunktionellen Ethylenverbindungen entsprechend der Formel IIIa, die über die entsprechenden Amid- oder Estergruppierungen miteinander verknüpft sind und wobei nur eine Ethylengruppe copolymerisiert wurde.

Ähnlich verhält es sich auch mit den Verbindungen gemäß Formel IIIa mit T = $-(CH_2)_z-V-(CH_2)_z-CH=CH-R^1$ wobei z = 0 bis 4, V entweder ein Polydimethylsiloxan-Rest W oder ein - $O-CO-C_6H_4-CO-O$-Rest sein kann und $R^1$ die oben angegebene Bedeutung besitzt. Diese Verbindungen leiten sich von den entsprechenden Dialkenyl-phenyl-dicarbonsäureestern oder Dialkenyl-polydimethylsiloxan-Derivaten ab.

Es ist im Rahmen der vorliegenden Erfindung auch möglich, dass nicht nur eine, sondern beide Ethylengruppen der difunktionellen Ethylenverbindungen copolymerisiert wurden. Dies entspricht im Wesentlichen den Baugruppen entsprechend der Formel IIIb

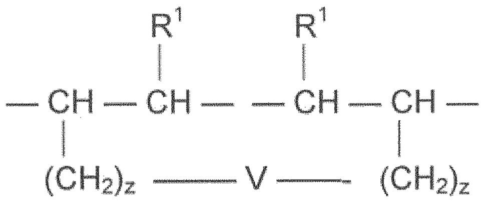

IIIb

wobei $R^1$, V und z die bereits beschriebene Bedeutung besitzen.

Vorzugsweise bestehen diese Copolymere aus 40 bis 55 Mol-% Baugruppen der Formel IVa und/oder IVb, 40 bis 55 Mol-% Baugruppen der Formel II und 1 bis 5 Mol-% Baugruppen der Formel IIIa oder IIIb. Gemäß einer bevorzugten Ausführungsform enthalten die Copolymere zusätzlich noch bis zu 50 Mol-%, insbesondere bis zu 20 Mol-%, bezogen auf die Summe der Baugruppen a), b) und c), Baugruppen, deren Monomer ein Vinyl-, Acrylsäure- oder Methacrylsäure-Derivat darstellt..

Die monomeren Vinylderivate können sich bevorzugt von einer Verbindung ableiten, die ausgewählt ist aus der Gruppe Styrol, Ethylen, Propylen, Isobuten oder Vinylacetat. Als bevorzugtes monomeres Acrylsäurederivat leiten sich die zusätzlichen Baugruppen insbesondere von Acrylsäure oder Methylacrylat ab. Als bevorzugtes monomeres Methacrylsäure-Derivat ist Methacrylsäure, Methylmethacrylat und Hydroxyethylmethacrylat anzusehen.

Die Anzahl der sich wiederholenden Strukturelemente der Copolymere ist hierbei nicht eingeschränkt, doch hat es sich als besonders vorteilhaft erwiesen, die Anzahl der Strukturelemente so einzustellen, dass die Copolymere ein mittleres Molekulargewicht von 1000 bis 200000 aufweisen.

Die zweite Komponente der Copolymeren stellt ein Oxyalkylenglykol-Alkenylether dar., der vorzugsweise in einer Menge von 40 bis 55 Mol-% eingesetzt wird. Bei den bevorzugten Oxyalkylenglykol-Alkenylethern entsprechend der Formel V

$$CH_2=CR^3-(CH_2)_p-O-(C_mH_{2m}O)_n-R^1 \qquad V$$

bedeuten $R^3$ = H oder ein aliphatischer Kohlenwasserstoffrest mit 1 bis 5 C-Atomen und p = 0 bis 3. $R^1$, m und n besitzen die bereits oben genannte Bedeutung. Als besonders vorteilhaft hat sich hierbei die Verwendung von Polyethylenglykolmonovinylether (p = 0 und m = 2) erwiesen, wobei n vorzugsweise Werte zwischen 2 und 15 besitzt.

Als dritte erfindungswesentliche Komponente zur Einführung der Baugruppen c) wird vorzugsweise 1 bis 5 Mol-% einer vinylischen Polyalkylenglykol-, Polysiloxan- oder Ester-Verbindung eingesetzt. Als bevorzugte vinylische Polyalkylenglykol-Verbindung werden Derivate entsprechend der Formel VI verwendet,

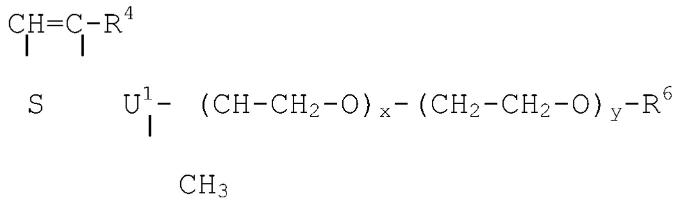

VI

wobei S vorzugsweise -H oder $COOM_a$ und $U^1$ = -CO-NH-, -O-oder $-CH_2O-$ sein können, d.h. es handelt sich um die Säureamid-, Vinyl- oder Allylether der entsprechenden Polypropylenglykol- bzw. Polypropylenglykol-Polyethylenglykol-Derivate. Die Werte für x sind 1 bis 150 und für y = 0 bis 15. $R^6$ kann entweder wiederum $R^1$ sein oder

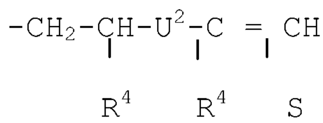

bedeuten, wobei $U^2$ = -NH-CO-, -O- sowie $-OCH_2-$ und S = $-COOM_a$ und vorzugsweise -H ist.

Im Falle von $R^6 = R^1$ und $R^1$ vorzugsweise H handelt es sich um die Polypropylenglykol(-Polyethylenglykol)-Monamide bzw. Ether der entsprechenden Acryl- (S = H, $R^4$ = H), Methacryl-(S = H, $R^4 = CH_3$) oder Maleinsäure- (S = $COOM_a$, $R^4$ = H) - Derivate. Beispiele für solche Monomere sind Maleinsäure-N-(methylpolypropylenglykol-)monoamid, Maleinsäure-N-(methoxy-polypropylenglykol-polyethylenglykol-)monoamid, Polypropylenglykolvinylether und Polypropylenglykolallylether.

Im Falle von $R^6 \neq R^1$ handelt es sich um bifunktionelle Vinylverbindungen, deren Polvpropylenglykol-(Polyethylenglykol-)-Derivate über Amid- oder Ethergruppen (-O- bzw. $-OCH_2-$) miteinander verbunden sind. Beispiele für solche Verbindungen sind Polypropylenglykol-bismaleinamidsäure, Polypropylenglykoldiacrylamid, Polypropylenglykoldimethacrylamid, Polypropylenglykoldivinylether, Polypropylenglykoldiallylether.

Als bevorzugte vinylische Polysiloxan-Verbindung werden Derivate entsprechend der Formel VII verwendet,

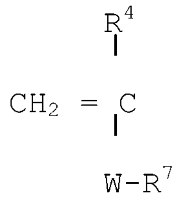

VII

wobei $R^4$ = -H und $CH_3$, W=

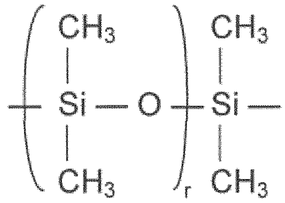

und r = 2 bis 100 und $R^7$ bevorzugt = $R^1$ ist. Beispiele für solche Monomere sind Monovinylpolydimethylsiloxane.

Als weitere vinylischen Polysiloxan-Verbindung kommen Derivate entsprechend der Formel VIII in Frage,

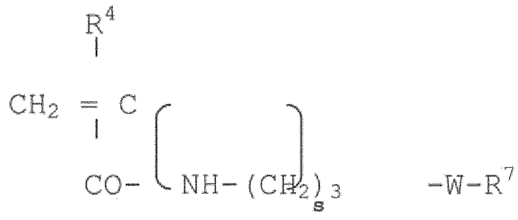

VIII

wobei s = 1 oder 2 sein kann, $R^4$ und W die oben genannte Bedeutung besitzen und $R^7$ entweder = $R^1$ oder aber

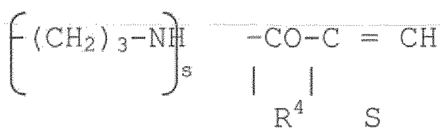

sein kann und S vorzugsweise Wasserstoff darstellt.

Beispiele für solche Monomere mit einer Vinylfunktion ($R^7 = R^1$) sind Polydimethylsiloxanpropylmaleinamidsäure oder Polydimethylsiloxandipropylenaminomaleinamidsäure. Im Falle von $R^7 \neq R^1$ handelt es sich um Divinylverbindungen wie z.B. Polydimethylsiloxan-bis-(propylmaleinamidsäure) oder Polydimethylsiloxan-bis-(dipropylenaminomaleinamidsäure).

Als weitere vinylischen Polysiloxan-Verbindung kommt ein bevorzugtes Derivat entsprechend der Formel IX in Frage,

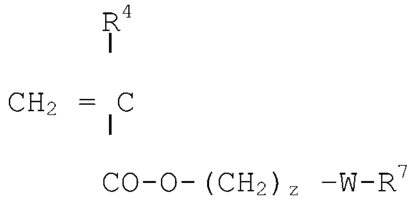

IX

wobei z 0 bis 4 sein kann und $R^4$ bzw. W die oben genannte Bedeutung besitzen. $R^7$ kann entweder $R^1$ oder aber

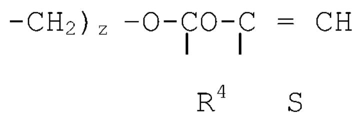

sein, wobei S bevorzugt Wasserstoff bedeutet. Beispiele für solche monovinylischen Verbindungen ($R^7 = R^1$) sind Polydimethylsiloxan-(1-propyl-3-acrylat) oder Polydimethylsiloxan-(1-propyl-3-methacrylat).

Im Falle von $R^7 \neq R^1$ handelt es sich um Divinylverbindungen, wie z.B. Polydimethylsiloxan-bis-(1-propyl-3-acrylat) oder Polydimethylsiloxan-bis-(1-propyl-3-methacrylat).

Als vinylische Esterverbindung im Rahmen der vorliegenden Erfindung werden vorzugsweise Derivate entsprechend der Formel X eingesetzt,

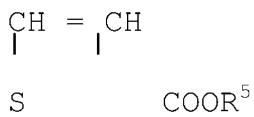

X

wobei S = $COOM_a$ oder $-COOR^5$ bedeuten und $R^5$ ein aliphatischer Kohlenwasserstoffrest mit 3 bis 20 C-Atomen, ein cycloaliphatischer Kohlenwasserstoffrest mit 5 bis 8 C-Atomen sowie ein Arylrest mit 6 bis 14 C-Atomen sein kann. a und M besitzen die oben genannte Bedeutung. Beispiele für solche Esterverbindungen sind Di-n-butylmaleinat bzw. -fumarat oder Mono-n-butyl-maleinat- bzw. -fumarat.

Desweiteren können auch Verbindungen entsprechend der Formel XI eingesetzt werden,

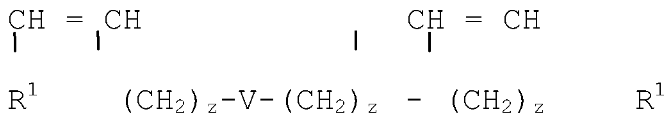

XI

wobei z wiederum 0 bis 4 sein kann und $R^1$ die bereits bekannte Bedeutung besitzt. V kann hierbei W (also eine Polydimethylsiloxan-Gruppierung) sein, was einer Dialkenylpolydimethylsiloxan-Verbindung, wie z. B. Divinylpolydimethylsiloxan, entspricht. Alternativ hierzu kann V auch $-O-CO-C_6H_4-CO-O-$ sein. Diese Verbindungen stellen Dialkenylphthalsäure-Derivate dar. Ein typisches Beispiel für solche Phthalsäure-Derivate ist Diallylphthalat.

Die Molekulargewichte der Verbindungen, welche die Baugruppe c) bilden, können in weiten Grenzen variiert werden und liegen vorzugsweise zwischen 150 und 10000.

Weiterhin können noch bis zu 50 Mol-%, insbesondere bis zu 20 Mol-%, bezogen auf die Monomeren mit den Baugruppen gemäß den Formeln II, III und IV eines Vinyl-, Acrylsäure- oder Methacrylsäure-Derivates einpolymerisiert werden. Als monomeres Vinylderivat findet bevorzugt Styrol, Ethylen, Propylen, Isobuten oder Vinylacetat Verwendung, als monomeres Acrylsäurederivat wird bevorzugt Acrylsäure oder Methylacrylat eingesetzt, während als monomere Methacrylsäure-Derivate schließlich bevorzugt Methacrylsäuremethylmethacrylat und Hydroxyethylmethacrylat herangezogen werden.

Die vorgenannten Copolymere sind in EP-A-736553 offenbart.

Die erfindungsgemäße Dispersion kann weiterhin ein Copolymeres enthalten, dessen Basis ein Oxyalkenylglykol-(meth)acrylsäureester ist und das Copolymere die folgenden Baugruppen enthält:

5-98 Gew.-% eines Monomeren vom Typ (a) (Alkoxy)polyalkylenglycolmono(meth)acrylester der allgemeinen Formel XV

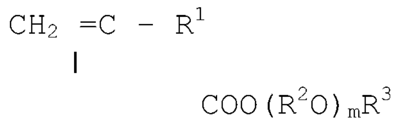

XV

worin

$R^1$ für ein Wasserstoffatom oder die Methylgruppe steht,

$R^2O$ für eine Gattung oder ein Gemisch von zwei oder mehr Gattungen einer Oxyalkylengruppe mit 2-4 Kohlenstoffatomen steht, mit der Maßgabe, dass zwei oder mehrere Gattungen des Gemischs entweder in Form eines Blocks oder in zufälliger Form zugegeben werden können,

$R^3$ für ein Wasserstoffatom oder eine Alkylgruppe mit 1 bis 5 Kohlenstoffatomen steht, und

m ein Wert ist, welcher die durchschnittliche Anzahl der Zugabemole von Oxyalkylengruppen ist, wobei m eine ganze Zahl im Bereich von 1 bis 200 ist.

95 bis 2 Gew.-% eines Monomeren vom (Meth)acrylsäuretyp (b) der allgemeinen Formel XVI

$$CH_2 = C(-R^4)-COOM^1$$

XVI

worin
$R^4$ für ein Wasserstoffatom oder die Methylgruppe steht, und $M^1$ für ein Wasserstoffatom, ein einwertiges Metallatom, ein zweiwertiges Metallatom, eine Amoniumgruppe oder eine organische Amingruppe,

- und 0 bis 50 Gew.-% eines anderen Monomeren (c), das mit diesen Monomeren copolymerisierbar ist, mit der Maßgabe, dass die Gesamtmenge von (a), (b) und (c) 100 Gew.-% ist.

Typische Monomere (a) sind:

Hydroxyethyl(meth)acrylat,

Hydroxypropyl(meth)acrylat,

Polyethylenglykolmono(meth)acrylat,

Polypropylenglykolmono(meth)acrylat,

Polybutylenglykolmono(meth)acrylat,

Polyethylenglykolpolypropylenglykolmono(meth)acrylat, Polyethylenglykolpolybutylenglykolmono(meth)acrylat,

Polypropylenglykolpolybutylenglykolmono(meth)acrylat, Polyethylenglykolpolypropylenglykolpolybutylenglykol mono(meth)acrylat,

Methoxypolyethylenglykolmono(meth)acrylat,

Methoxypolypropylenglykolmono(meth)acrylat,

Methoxypolybutylenglykolmono(meth)acrylat,

Methoxypolyethylenglykolpolypropylenglykol mono(meth)acrylat,

Methoxypolyethylenglykolpolybutylenglykol

mono(meth)acrylat,

Methoxypolypropylenglykolpolybutylenglykol mono(meth)acrylat,

Methoxypolyethylenglykolpolypropylenglykolpolybutylen glykolmono(meth)acrylat,

Ethoxypolyethylenglykolmono(meth)acrylat,

Ethoxypolypropylenglykolmono(meth)acrylat,

Ethoxypolybutylenglykolmono(meth)acrylat,

Ethoxypolyethylenglykolpolypropylenglykol

mono(meth)acrylat,

Ethoxypolyethylenglykolpolybutylenglykolmono(meth)acrylat,

Ethoxypolypropylenglykolpolybutylenglykolmono(meth)acrylat und/oder

Ethoxypolyethylenglykolpolypropylenglykolpolybutylen glykolmono(meth)acrylat.

Typische Monomere (b) sind: Acrylsäure and Methacrylsäure, mono- und divalente Metallsalze, Ammoniumsalze und/oder organische Aminsalze hiervon.

Typische Monomere (c)sind: Ester aliphatische Alkohole mit 1 bis 20 C-Atomen mit (Meth)acrylsäure; ungesättigten Dicarbonsäuren wie Maleinsäure, Fumarsäure, Citraconsäure, mono- und divalente Metallsalze, Ammoniumsalze und/oder organische Aminsalze hiervon; Mono- oder Diester von ungesättigten Dicarbonsäuren wie Maleinsäure, Fumarsäure, Citraconsäure mit aliphatischen Alkoholen von 1 bis 20 C-Atomen, mit Glykolen mit 2 bis 4 C-Atomen, mit (Alkoxy)polyalkylenglykolen von 2 bis 100 Zugabemolen der vorgenannten Glykole; ungesättigte Amide wie (Meth)acrylamid und (Meth)acrylalkylamid; Vinylester wie Vinylacetat und Vinylpropionat; aromatische Vinylverbindungen wie Styrol; ungesättigte Sulfonsäuren, wie (Meth)allylsulfonsäure, Sulfoethyl(meth)acrylat, 2-Methylpropansulfonsäure(meth)acrylamid, Styrolsulfonsäure, mono- und divalente Metallsalze, Ammoniumsalze und/oder organische Aminsalze hiervon.

Die erfindungsgemäßen Dispersionen können nach einem Verfahren hergestellt werden, bei dem man ein gefälltes Siliciumdioxidpulver in einer wässerigen Lösung eines Fließmittels mittels eines geeigneten Dispergieraggregates dispergiert und nachfolgend gegebenenfalls mit Wasser weiter verdünnt

Zur Herstellung der verwendeten Siliciumdioxiddispersion kann es vorteilhaft sein zurächst eine Vordispersion herzustellen. In einer bevorzugten Ausführungsform wird dazu Siliciumdioxidpartikel in einer flüssigen Komponente, bevorzugt Wasser, besonders bevorzugt entionisiertes Wasser dispergiert. Es ist aber auch möglich, einen Filterkuchen zu redispergieren, d. h. die Siliciumdioxidpartikel nicht zuerst zu trocknen. Diese zweite Ausführungsform ist selbstverständlich mit ökonomischen Vorteilen ggü. der ersten Ausführungsform verbunden. Beliebige Mischformen dieser beiden Ausführungsformen sind ebenfalls möglich, d. h. es ist möglich einen Filterkuchen zu redispergieren und anschließend getrocknetes Siliciumdioxid zuzugeben und umgekehrt. Es ist auch möglich Basisdispersionen von Mischungen von zumindest zwei verschiedenen Siliciumdioxiden herzustellen.

Die Herstellung der Vordispersionen erfolgt in an sich bekannter Weise mittels geeigneter Dispergieraggregate. So kann die Dispergierung des Siliciumdioxidpulvers in Apparaten ausgeführt werden, die eine vergleichsweise niedrige Scherenergie in das System einbringen (z.B. Dissolver, Rotor-Stator-Systeme). Es können aber auch die gleichen Aggregate verwendet werden, die zur Herstellung der eigentlichen Dispersion verwendet werden.

Der pH-Wert der Vordispersion bzw. der Dispersion kann in einem optionalen weiteren Schritt auf den gewünschten Wert, d. h. einen Wert von 8,0 bis 12, besonders bevorzugt 8,5 bis 12, ganz besonders bevorzugt 8,7 bis 10 und insbesondere bevorzugt 9 bis 9,5 eingestellt werden. Dies kann je nach pH-Wert des Siliciumdioxids durch Zugabe einer basischen Komponente oder eines Säurungsmittels erfolgen. Es kann prinzipiell jedes basische Mittel verwendet werden, bevorzugt ein Alkali- oder Erdalkalihydroxid bzw. organische Basen oder Ammoniak. Prinzipiell kann als Säuerungsmittel auch jedes saure Mittel verwendet werden, z. B. Mineralsäuren, organische Säuren.

Gemäß einer Verfahrensvariante ist es auch möglich, Siliciumdioxid zu verwenden, dessen pH-Wert bereits so eingestellt ist, dass das Siliciumdioxid selbst den pH-Wert der Dispersion auf den gewünschten Wert einstellt. In dieser Variante kann der pH-Wert des Siliciumdioxids in einem der Herstellungsschritte des Siliciumdioxids, beispielsweise während der Fällung oder während der Trocknung, durch Zugabe geeigneter basischer oder saurer Mittel eingestellt werden. Diesbezüglich sind dem Fachmann geeignete Techniken bekannt.

Zur Herstellung der Dispersion wird die zu dispergierende und mit der flüssigen Phase in Kontakt gebrachte Kieselsäure oder die Vordispersion, deren pH-Wert optional entsprechend eingestellt wurde, mittels eines geeigneten Aggregats zerkleinert.

Grundsätzlich kann jedes geeignete Dispergieraggregat verwendet werden. So sind z. B. Dispergieraggregate geeignet, deren Energieeintrag ausreicht, das Siliciumdioxidpulver bzw. den Filterkuchen so zu dispergieren, dass die Agglomerate nach der Dispergierung eine mittlere Partikelgröße kleiner 1 $\mu$m aufweisen. Hierfür sind spezifische Energieeinträge je nach Feststoff von 0,1 bis 10 kWh/kg erforderlich. Um diese hohen spezifischen Energieeinträge zu realisieren, können grundsätzlich Verfahren mit hoher Leistungsdichte und geringer Verweilzeit, Verfahren mit geringer Leistungsdichte und hoher Verweilzeit sowie Zwischenformen eingesetzt werden.

Hochdrucksysteme wie z.B. Nanomizer, Microfluidizer und andere Düsensysteme, bei denen die Dispersion unter Hochdruck von bis 50 zu 5000 bar durch eine Düse strömt und durch die Energiedissipation in und nach der Düse dispergiert wird, erreichen bei einer einmaligen Passage sehr hohe Energieeinträge von bereits 5.000 kJ/$m^3$ bis 500.000 kJ/$m^3$. Rührwerksmühlen hingegen führen zu deutlich geringeren spezifischen Energieeinträgen pro Passage von 5 bis 500 kJ/$m^3$. Um ausreichende Partikelfeinheiten zu erreichen, muß die Dispersion wesentlich häufiger die Mühle passieren, was zu deutlich höheren Beanspruchungshäufigkeiten als in Hochdrucksystemen führt. Die große Beanspruchungshäufigkeit bei geringer Intensität wirkt sich positiv auf die Struktur und die Oberfläche der Partikeln und damit

die Stabilität der Dispersion aus.

Um hohe Füllgrade zu erreichen und eine stabile Dispersion mit niedriger Viskosität zu erhalten, sollten vorteilhafter Weise Scherenergien von > 1000 kJ/$m^3$ aufgebracht werden. Besonders gute Ergebnisse werden erzielt mit Rührwerkskugelmühlen, Hochdruckhomogenisatoren oder Planetenkugelmühlen. Der Betrieb dieser Mühlen ist dem Fachmann bekannt.

Besonders vorteilhaft erwies sich die Verwendung von Kugelmühlen, insbesondere Rührwerkskugelmühlen. Der Produktfluß durch die Mühle kann in Pendel- oder in Kreislauffahrweise erfolgen. Aufgrund hoher Umlaufzahlen ist hier eine Anordnung in Kreislauffahrweise einfacher zu realisieren. Die Umwälzleistung kann von 10 bis 300 kg/h variieren und liegt vorteilhafter Weise im Bereich von 25 bis 200 kg/h, besonders bevorzugt im Bereich von 50 - 150 kg/h und insbesondere bevorzugt im Bereich von 80 - 120 kg/h.

Das Rührwerk kann in Form von Scheiben, Stiften, Seift-Gegenstift-Anordnungen, einem Ringspalt oder Ähnlich gestaltet sein. Bevorzugt ist eine Scheibenanordnung. Die Mahldauer beträgt abhängig von der Dispergierbarkeit des Produkts und der eingesetzten Menge 10 min bis zu 80 Stunden, bevorzugt 0,5 bis 50 Stunden, besonders bevorzugt 1 bis 25 Stunden und insbesondere bevorzugt 5 bis 15 Stunden. Hierdurch lassen sich spezifische Energieeinträge (bezogen auf kg Dispersion) von 0,01 bis 10 kWh/kg erreichen. Bevorzugt sind Energieeinträge von 0,05 bis 5 kWh/kg, besonders bevorzugt 0,1 bis 1 kWh/kg, ganz besonders bevorzugt 0,1 bis 0,5 kWh/kg und insbesondere bevorzugt 0,25 bis 0,3 kWh/kg. Die Mahlkörper, können aus Glas, Aluminiumoxid, Zirkonoxid oder aus weiteren anorganischen Oxiden sowie diversen Mischungen anorganischer Oxide bestehen. Vorteilhaft ist aufgrund der hohen Dichte die Verwendung von Zirkonoxid-Mahlkörpern, die mittels Yttriumoxid gegen Abrieb stabilisiert sind. Die Mahlkörpergröße kann von 20 μm bis einige mm variieren, vorteilhafterweise werden Mahlkörper der Größe 0,02 bis 10 mm, besonders bevorzugt 0,05 bis 5 mm, ganz besonders bevorzugt 0,1 bis 1 mm und insbesondere bevorzugt 0,2 - 0,4 mm verwendet. Der Mahlkörperfüllgrad, bezogen auf das freie Volumen des Mahlraums kann von 60 bis 99%, bevorzugt 70 - 95 %, besonders bevorzugt 80 bis 95% und insbesondere bevorzugt 90 bis 95 % variieren. Die Umfangsgeschwindigkeit des Mahlwerkzeugs kann von 1 m/s bis zu 15 m/s, bevorzugt 5 m/s bis 15 m/s, besonders bevorzugt 8 m/s bis 12 m/s variieren.

Nach der Vermahlung erfolgt optional eine Aufkonzentrierung der Dispersion bis zum gewünschten Siliciumdioxidgehalt. Diese Aufkonzentrierung kann nach jeder dem Fachmann bekannten Technik erfolgen, z.B. durch Reduktion des flüssigen Mediums so z. B. durch Vakuumverdampfung, Querstromfiltration, kontinuierliche bzw. diskontinuierliche Zentrifugation, Filtration, oder durch Erhöhung des Feststoffgehaltes.

Sollen niedrige Füllgrade erreicht werden, so kann die Dispergierung des Siliciumdioxidpulvers auch in Apparaten ausgeführt werden, die eine vergleichsweise niedrige Scherenergie in das System einbringen (z.B. Dissolver, Rotor-Stator-Systeme).

## Bestimmung der Partikelgrößenverteilung

Die Bestimmung der Partikelverteilung der erfindungsgemäßen Dispersionen erfolgt nach dem Prinzip der Laserbeugung auf einem Laserdiffraktometer (Fa. Horiba, LA-920). Die Partikelverteilung entspricht der Partikelverteilung aller in der Dispersion vorhandenen Partikel.

Zunächst wird eine Probe der Kieselsäuredispersion unter Rühren entnommen, in ein Becherglas überführt und durch Zugabe von Wasser ohne Zusatz von Dispergieradditiven so verdünnt, dass eine Dispersion mit einem Gewichtsanteil von ca. 1 Gew.-% $SiO_2$ entsteht. Unmittelbar im Anschluss an die Dispergierung wird von einer Teilprobe der Dispersion mit dem Laserdiffraktometer (Horiba LA-920 mit Gerätestandardsoftware) die Partikelgrößenverteilung bestimmt. Für die Messung ist ein relativer Brechungsindex von 1,09 zu wählen.

Alle Messungen erfolgen bei 23°C. Die Partikelgrößenverteilung sowie die relevanten Größen wie z. B. die mittlere Partikelgröße $d_{50}$ werden vom Gerät automatisch berechnet und grafisch dargestellt. Es sind die Hinweise in der Bedienungsanleitung zu beachten.

## Bestimmung der BET-Oberfläche

Liegt die Kieselsäure nicht als Feststoff, sondern in wässriger Dispersion vor, so ist vor der Bestimmung der BET-Oberfläche folgende Probenvorbereitung durchzuführen:

> 100 ml der Kieselsäuredispersion werden unter Rühren entnommen, in eine Porzellanschale überführt und für 72 h bei 105 °C getrocknet. Um organische Bestandteile zu entfernen, wird die getrocknete Kieselsäure für 24 h auf 500 °C erhitzt. Nachdem die Kieselsäureprobe abgekühlt ist, wird sie mit dem Spatel zerkleinert und die BET-Oberfläche bestimmt.

Die BET-Oberfläche von Kieselsäure als Feststoff wird in Anlehnung an ISO 5794-1/Annex D mit dem Gerät TRISTAR 3000 (Fa. Micromeritics) nach der Multipointbestimmung gemäß DIN ISP 9277 ermittelt.

**Bestimmung des pH-Wertes der Dispersion**

Der pH-Wert der wässrigen Dispersionen wird in Anlehnung an DIN EN ISO 787-9 bei 20 °C bestimmt. Zur Bestimmung des pH-Wertes werden die Dispersionen mit Wasser auf einen Gewichtsanteil von 5 % $SiO_2$ verdünnt.

**Bestimmung der DBP-Aufnahme**

Die DBP-Aufnahme (DBP-Zahl), die ein Maß für die Saugfähigkeit der Fällungskieselsäure ist, wird in Anlehnung an die Norm DIN 53601 wie folgt bestimmt:

12,50 g pulverförmige oder kugelförmige Kieselsäure mit 0 - 10 % Feuchtegehalt (gegebenenfalls wird der Feuchtegehalt durch Trocknen bei 105 °C im Trockenschrank eingestellt) werden in die Kneterkammer (Artikel Nummer 279061) des Brabender-Absorptometer " E " gegeben (ohne Dämpfung des Ausgangsfilters des Drehmomentaufnehmers). Unter ständigem Mischen (Umlaufgeschwindigkeit der Kneterschaufeln 125 U/min) tropft man bei Raumtemperatur durch den "Dosimaten Brabender T 90/50" Dibutylphthalat mit einer Geschwindigkeit von 4 ml/min in die Mischung. Das Einmischen erfolgt mit nur geringem Kraftbedarf und wird anhand der Digitalanzeige verfolgt. Gegen Ende der Bestimmung wird das Gemisch pastös, was mittels eines steilen Anstieges des Kraftbedarfs angezeigt wird. Bei einer Anzeige von 600 digits (Drehmoment von 0,6 Nm) wird durch einen elektrischen Kontakt sowohl der Kneter als auch die DBP-Dosierung abgeschaltet. Der Synchronmotor für die DBP-Zufuhr ist mit einem digitalen Zählwerk gekoppelt, so das der Verbrauch an DBP in ml abgelesen werden kann.

Die DBP-Aufnahme wird in g/(100 g) angegeben und anhand der folgenden Formel berechnet:

$$DBP = \frac{V * D * 100}{E} * \frac{g}{100\ g} + K$$

mit

DBP = DBP-Aufnahme in g/(100 g)
V = Verbrauch an DBP in ml
D = Dichte von DBP in g/ml (1,047 g/ml bei 20 °C)
E = Einwaage an Kieselsäure in g
K = Korrekturwert gemäß Feuchtekorrekturtabelle in g/ (100 g)

Die DBP-Aufnahme ist für die wasserfreie, getrocknete Kieselsäure definiert. Bei Verwendung von feuchten Fällungskieselsäuren ist der Korrekturwert K für die Berechnung der DBP-Aufnahme zu berücksichtigen. Dieser Wert kann anhand der folgenden Korrekturtabelle ermittelt werden, z. B. würde ein Wassergehalt der Kieselsäure von 5,8 % einen Zuschlag von 33 g/(100 g) für die DBP-Aufnahme bedeuten. Die Feuchte der Kieselsäure wird gemäß der Methode "Bestimmung der Feuchte bzw. des Trocknungsverlusts" ermittelt.

Feuchtekorrekturtabelle für Dibutylphthalataufnahme (wasserfrei)

| % Feuchte | . % Feuchte<br>,0 | ,2 | ,4 | ,6 | ,8 |
|---|---|---|---|---|---|
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |

(fortgesetzt)

| % Feuchte | . % Feuchte ,0 | ,2 | ,4 | ,6 | ,8 |
|---|---|---|---|---|---|
| 9 | 42 | 43 | 43 | 44 | 44 |
| 10 | 45 | 45 | 46 | 46 | 47 |

**Bestimmung der Feuchte oder des Trockungsverlustes**

Die Feuchte von Kieselsäure wird gemäß ISO 787-2 nach 2-stündiger Trocknung in einem Umlufttrockenschrank bei 105 °C bestimmt. Dieser Trocknungsverlust besteht überwiegend aus Wasserfeuchtigkeit.

**Bestimmung des Glühverlustes**

Nach dieser Methode wird der Gewichtsverlust von Kieselsäure in Anlehnung an DIN EN ISO 3262-1 bei 1000°C bestimmt. Bei dieser Temperatur entweicht physikalisch und chemisch gebundenes Wasser sowie andere flüchtige Bestandteile. Die Feuchte (TV) der untersuchten Probe wird nach der zuvor beschriebenen Methode "Bestimmung der Feuchte bzw. des Trockenverlusts" nach DIN EN ISO 787-2 ermittelt.

**Bestimmung des A1- und Na-Gehaltes**

Die Bestimmung des Al-Gehaltes erfolgt als $Al_2O_3$, die des Na-Gehaltes als $Na_2O$. Beide Bestimmungen werden nach ISO 3262-18 mittels Flammen-Atomadsorptionsspektroskopie durchgeführt.

**Bestimmung des $SiO_2$-Gehaltes**

Die Bestimmung des $SiO_2$-Gehaltes erfolgt nach ISO 3262-19.

**Beispiele 1 - 3**

Herstellung der Dispersionen

Die Kenngrößen der für die Herstellung der Dispersionen eingesetzten Kieselsäuren sind in Tabelle 1 angegeben.

Die Dispersionen werden in einer Rührwerkskugelmühle (LME 4, Fa. Netzsch) hergestellt. Der Mahlraum sowie das Scheibenrührwerk bestehen aus abriebsfester Keramik ($Al_2O_3$ bzw. $ZrO_2$). Die Mahlkugeln aus yttriumstabilisiertem $ZrO_2$ haben einen Durchmesser von 0,2 bis 0,4 mm und füllen den Mahlraum zu 90 % (8,84 kg). Zur Vordispergierung werden 22,5 kg voll entsalztes Wasser in einem 501-Behälter mit Bodenauslass vorgelegt. Dann werden 2,5 kg Kieselsäure nach und nach mittels Dissolverscheibe (Drehzahl = 380-940 U/min; Umfangsgeschwindigkeit = 3-7,4 m/s) so lange eingerührt, bis die Kieselsäure in der Flüssigkeit dispergiert ist. Anschließend wird der pH-Wert der Dispersion mit KOH auf 9 eingestellt. Der pH-Wert wird regelmäßig kontrolliert und gegebenfalls nachreguliert. Zum Erreichen der gewünschten Feinheit wird die Dispersion im Kreislauf durch die Kugelmühle geführt. Bei allen Versuchen bleibt die Umfangsgeschwindigkeit mit 10 m/s und der Durchsatz mit ca. 100 kg/h konstant.

Durch portionsweise Zugabe weiterer Kieselsäure im Vorlagebehälter wird die Konzentration der Dispersion an $SiO_2$ weiter erhöht. Die Mühle wird hierbei weiterhin im Kreislauf betrieben. Wenn die gewünschte $SiO_2$-Konzentration erreicht ist, wird die Dispersion in einen Behälter überführt und das Fließmittel (Polycarboxylatether (PCE) gemäß EP-A-1189955, Beispiel 2), in Form einer wässrigen Lösung (PCE-Gehalt - 45 Ges.-%) bei Raumtemperatur eingerührt. Das Verhältnis von PCE zu Siliciumdioxid wird gemäß Tabelle 2 eingestellt.

Die Zusammensetzung der Dispersionen ist in Tabelle 2 wiedergegeben. Das Vergleichsbeispiel enthält kein Siliciumdioxid, sondern lediglich PCE und stellt keine Dispersion dar.

Die erfindungsgemäßen Dispersionen zeigen innerhalb eines Zeitraumes von 6 Monaten keine nennenswerte Änderung bezüglich Sedimentationsstabilität und Viskosität.

Tabelle 1

| **Prüfgröße** | **Einheit** | **Beispiel 1** | **Beispiel 2** | **Beispiel 3** | **Messmethode** |
|---|---|---|---|---|---|
| BET-Oberfläche | $m^2/g$ | 165 | 270 | 85 | Areameter, ISO 5794-1/Annex D |
| mittl. Partikelgröße $d_{50}$ | µm | 11 | 13 | 7,5 | Laserbeugung in Anlehnung an ISO 13320-1 |
| Stampfdichte | g/l | 80 | 180 | 300 | nicht gesiebt, in Anlehnung an ISO 787-11 |
| Trocknungsverlust | Ges.-% | 4 | 5 | 6 | 2 h bei 105 °C, in Anlehnung an ISO 787-2 |
| Glühverlust | Ges.-% | 3 | 4 | 8 | 2 h bei 1000 °C, in Anlehnung an ISO 3262-1 |
| pH-Wert | | 5, 5 | 6 | 10,1 | 5% in Wasser, in Anlehnung an ISO 787-9 |
| DBP-Absorption | g/100g | 250 | 250 | 200 | Bezogen auf wasserfreie Substanz, in Anlehnung an DIN 53601 |
| $SiO_2$-Gehalt | Gew.-% | 99,4 | 99,5 | 82 | in Anlehnung an ISO 3262-19 |
| Al-Gehalt als $Al_2O_3$ | Gew.-% | - | - | 9,5 | in Anlehnung an ISO 3262-18 |
| Na-Gehalt als $Na_2O$ | Gew.-% | 0,3 | 0,2 | 8 | in Anlehnung an ISO 3262-18 |

| | Größe | Einheit | Beispiel 1 | Beispiel 2 | Beispiel3 | Vergleichsbeispiel |
|---|---|---|---|---|---|---|
| Dispersion vor Zugabe von PCE | Eingesetzte Kieselsäure | | Kieselsäure 1 | Kieselsäure 2 | Kieselsäure 3 | - |
| | $SiO_2$-Gehalt | Gew.-% | 33,4 | 22,4 | 40,7 | - |
| | Mittl. Partikelgröße $d_{50}$ | nm | 200 | 186 | 310 | - |
| | pH-Wert | - | 9 | 9 | 9 | - |
| Dispersion nach Zugabe von PCE | $SiO_2$-Endgehalt | Gew.-% | 33,4 | 22,4 | 40,7 | 0 |
| | PCE-Gehalt | Gew.-% | 10,0 | 7,8 | 11,0 | 30 |
| | BET-Oberfläche | $m^2/g$ | 131 | 199 | 91 | - |
| | Mittl. Partikelgröße $d_{50}$ | nm | 200 | 186 | 310 | - |
| | PCE/$SiO_2$ | - | 0,30 | 0,35 | 0,27 | - |
| | pH-Wert | - | 9 | 9 | 9 | 7 |

Tabelle 2

**Beispiel 4: Anwendungstechnische Prüfung**

Die Herstellung von Normenmörtel sowie die Prüfung der Festigkeit erfolgt gemäß DIN EN 196-1. Zur Herstellung des Mörtels wird Zement der Bezeichnung CEM I 52,5 Mergelstetten eingesetzt. Die Herstellung des Mörtels erfolgt bei 20°C. Den Mörtelmischungen werden die Dispersionen entsprechend einem Siliciumdioxid-Gehalt von 0,5 Ges.-%,

bezogen auf das Zementgewicht zugegeben. Das Wasser/Zement-Verhältnis beträgt immer 0,4.

Aus dem Mörtel werden gemäß DIN 196-1 Prüfkörper der Größe 40 mm x 40 mm x 160 mm hergestellt. In Anlehnung an diese Norm erfolgt an diesen Prüfkörpern die Bestimmung der Biegezufestigkeit und der Druckfestigkeit nach 8 h Alterung der Prüfkörper.

Die Ergebnisse sind in der Tabelle 3 zusammengefasst.

Tabelle 3: Festigkeitsentwicklung von Mörtelprismen in Gegenwart verschiedener Dispersionen gefällter Kieselsäuren (Dosierung jeweils 0.5%, bezogen auf das Zementgewicht); Verhältnis Wasser/Zement = 0,4; *FM* = Anfangsfließmaß; *BZF* = Biegezugfestigkeit in $N/mm^2$; *DF* = Druckfestigkeit in $N/mm^2$

| Additiv | Dos. MVA2500 | FM in cm | BZF 8h in $N/mm^2$ | DF 8h in $N/mm^2$ |
|---|---|---|---|---|
| Dispersion aus Beispiel 1 | 0,15% | 24,1 | 3, 91 | 15,59 |
| Dispersion aus Beispiel 2 | 0,175 % | 24,8 | 3, 85 | 17 |
| Dispersion aus Beispiel 3 | 0,135 | 24,2 | 3, 68 | 14, 97 |
| Vergleichsbeispiel 1 (nur PCE ohne Kieselsäure) | 0,125 % | 24,8 | 2,796 | 10,227 |
| Vergleichsbeispiel 2 (Kieselsäure gemäß Beispiel 3 jedoch nicht in Form einer Dispersion, sondern als Pulver, d. h. trocken zugegeben) | 0,14 % | 25,1 | 3,52 | 13,41 |

Die erhaltenen Ergebnisse zeigen eine deutliche Steigerung der Frühfestigkeit (gemessen als Biegezugfestigkeit nach 8 h und Druckfestigkeit nach 8 h) bei Verwendung der erfindungsgemäßen Dispersionen. Interessant ist auch, dass die Dispersion 2 wirksamer ist, als die identische Kieselsäure in trockener Form.

Weiterhin werden Versuche im Kalorimeter durchgeführt. Als Zement wird CEM I 42,5 Bernburg verwendet. Zum Einsatz kommen die erfindungsgemäßen Dispersionen Beispiel 1 bis Beispiel 3. Die Dispersionen werden so dosiert, dass der Anteil an Siliciumdioxid 0,5 Gew.-% bezogen auf den eingesetzten Zement beträgt. Das Wasser/Zement-Verhältnis liegt konstant bei 0,5. Der Vergleich erfolgt gegen die Vergleichsbeispiel 1, das kein Siliciumdioxid, aber PCE enthält. Bei allen Versuchen war das Anfangsfließmaß 24 +/-1cm.

Die erhaltenen Kurven (Figur 1) zeigen die frei werdende Energie in [mW/g CEM] gegen die Zeit in [h] im Zementleim-Probenkörper. Die Wärmeentwicklung ist auf die exotherme Reaktion der Silikatphasen im Zement mit Wasser zurückzuführen. Das Maximum der durch Kalorimetrie erhaltenen Kurve kann mit der Festigkeitsentwicklung im Zement korreliert werden, d.h. ein zum früheren Zeitpunkt auftretendes Maximum bedeutet eine früher einsetzende Frühfestigkeitsentwicklung im Bauteil.

Die Lage der Maxima der Kurven aus Figur 1 auf der Zeitachse sind in nachfolgender Tabelle 4 zusammengefasst:

Tabelle 4

| | Dispersion nach Beispiel 1 | Dispersion nach Beispiel 2 | Dispersion nach Beispiel 3 | Vergleichsbeispiel 1 |
|---|---|---|---|---|
| Lage des Maximums der Wärmeentwicklung auf der Zeitachse | 9,0 h | 8,8 h | 9,2 h | 10 h |

Aus den Ergebnissen kann geschlossen werden, dass die Verwendung der erfindungsgemäßen Dispersionen eine deutliche Beschleunigung der Zementhydratation bewirkt. Der Beginn der Silikathydratation, sowie das Maximum der Wärmeentwicklung liegen um 8 - 12 % früher als im Fall des Vergleichsbeispiels 1.

## Patentansprüche

1. Dispersion,
**dadurch gekennzeichnet, dass**

- zumindest ein gefälltes Siliciumdioxid und wenigstens ein Fließmittel enthalten ist, wobei das Fließmittel ein Polycarboxylatether ist,
- das zumindest ein gefälltes Siliciumdioxid eine BET-Oberfläche von größer 50 $m^2/g$ aufweist,
- die Aggregate und/oder Agglomerate des gefällten Siliciumdioxids in der Dispersion einen mittleren Durchmesser von weniger als 1 $\mu m$ aufweisen und
- der Anteil an Siliciumdioxid 5 bis 50 Gew.-%, bezogen auf die Gesamtmenge der Dispersion, beträgt.

**2.** Dispersion nach Anspruch 1, **dadurch gekennzeichnet, dass** die Dispersion frei von Bindemitteln ist.

**3.** Dispersion nach Anspruch 1 oder 2, **dadurch gekennzeichnet, dass** die Aggregate und/oder Agglomerate in der Dispersion einen mittleren Durchmesser von 50 bis 750 nm aufweisen.

**4.** Dispersion nach einem der Ansprüche 1 bis 3, **dadurch gekennzeichnet, dass** der Anteil an Siliciumdioxid in der Dispersion in Summe 10 bis 50 Gew.-%, bezogen auf die Gesamtmenge der Dispersion, beträgt.

**5.** Dispersion nach einem der Ansprüchen 1 bis 4, **dadurch gekennzeichnet, dass** der pH-Wert der Dispersion zwischen 8 und 12 liegt.

**6.** Dispersion nach einem der Ansprüchen 1 bis 5, **dadurch gekennzeichnet, dass** das Fließmittel ein wasserlöslicher Polycarboxylatether ist.

**7.** Dispersion nach einem der Ansprüchen 1 bis 6, **dadurch gekennzeichnet, dass** der Polycarboxylatether ein Copolymer auf Basis von Oxyalkenylglykol-alkenylethern ist und das Copolymere folgende Baugruppen enthält:

a) 51 bis 95 Mol-% der Baugruppen der Formel Ia und/oder Ib und/oder Ic

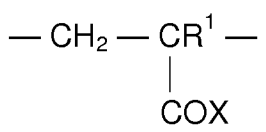

Ia

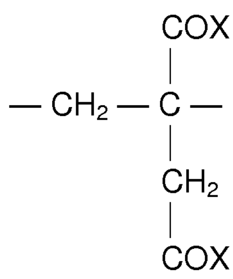

Ib

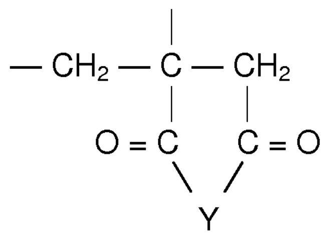

Ic

wobei
$R^1$ = Wasserstoff oder ein aliphatischer Kohlenwasserstoffrest mit 1 bis 20 C-Atomen

$$X = -OM_a, -O-(C_mH_{2m}O)_n-R^2, -NH-(C_mH_{2m}O)_n-R^2$$

M = Wasserstoff, ein ein- oder zweiwertiges Metallkation, Ammoniumion, ein organischer Aminrest,
a = ½ oder 1
$R^2$ = Wasserstoff, ein aliphatischer Kohlenwasserstoffrest mit 1 bis 20 C-Atomen, ein cycloaliphatischer Kohlenwasserstoffrest mit 5 bis 8 C-Atomen, ein ggf. substituierter Arylrest mit 6 bis 14 C-Atomen
Y = O, $NR^2$
m = 2 bis 4 und n = 0 bis 200 bedeuten,

b) 1 bis 48,9 Mol-% Baugruppe der allgemeinen Formel II

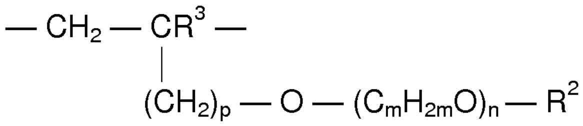

II

wobei

$R^3$ für Wasserstoff oder einen aliphatischen Kohlenwasserstoffrest mit 1 bis 5 C-Atomen
p für 0 bis 3 stehen und
$R^2$, m und n die oben genannte Bedeutung besitzen,

c) 0,1 bis 5 Mol-% Baugruppen der Formel IIIa oder IIIb

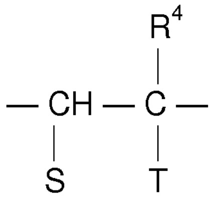

IIIa

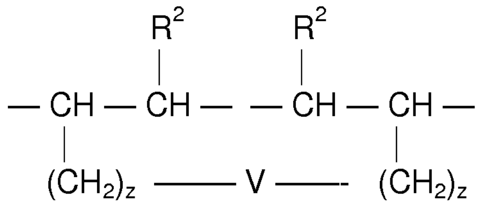

IIIb

wobei

S = -H, - $COOM_a$, - $COOR^5$
T = $-U^1-(CH(CH3)-CH_2-O)_x-(CH_2-CH_2-O)_y-R^6$

- $W-R^7$
- $CO-[NH-(CH_2)_3]_s-W-R^7$
- $CO-O-(CH_2)_z-W-R^7$
- $(CH_2)_z-V-(CH_2)_z-CH=CH-R^2$

-$COOR^5$ im Falle von S = -$COOR^5$ oder $COOM_a$ $U^1$ = -CO-NH-, -O-, -$CH_2O$- $U^2$ = -NH-CO-, -O-, -$OCH_2$- V = -O-CO-$C_6H_4$-CO-O- oder -W-

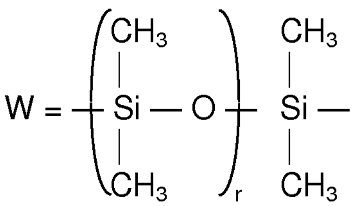

$R^4$ = H, $CH_3$
$R^5$= aliphatischer Kohlenwasserstoffrest mit 3 bis 20 Kohlenstoffatomen, cycloaliphatischer Kohlenwasserstoffrest mit 5 bis 8 C-Atomen, Arylrest mit 6 bis 14 C-Atomen
$R^6$ = $R^2$,

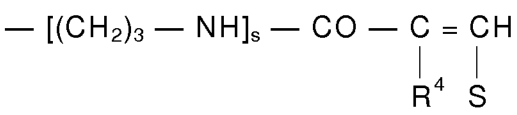

$R^7$ = $R^2$,

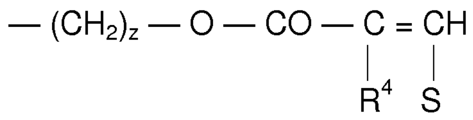

r = 2 bis 100
s = 1, 2
z = 0 bis 4
x = 1 bis 150
y = 0 bis 15

bedeuten sowie
d)0 bis 47,9 Mol Baugruppen der allgemeinen Formel IVa und/oder IVb

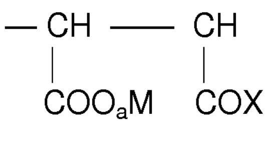

IVa

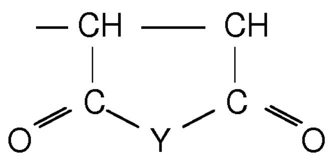

IVb

mit der oben angegebenen Bedeutung für a, M, X und Y.

**8.** Dispersion nach den Ansprüchen 1 bis 6, **dadurch gekennzeichnet, dass** die Basis des Copolymeren ein Oxyalkenylglykol-alkenylether ist und das Copolymere folgende Baugruppen enthält:

a. 10 bis 90 Mol-% Baugruppen der Formel IVa und/oder IVb

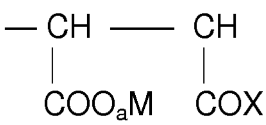

IVa

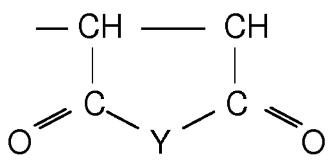

IVb

wobei

M = Wasserstoff, ein- oder zweiwertiges Metallkation, Ammoniumion, organischer Aminrest,
a = 1, oder für den Fall, dass M ein zweiwertiges Metallkation ist, 1/2 ist,
X = ebenfalls $-OM_a$ oder
$-O-(C_mH_{2m}O)_n-R^1$ mit $R^1$ = H, aliphatischer Kohlenwasserstoffrest mit 1 bis 20 C-Atomen, cycloaliphatischer Kohlenwasserstoffrest mit 5 bis 8 C-Atomen, ggf. substituierter Arylrest mit 6 bis 14 C-Atomen,
m = 2 bis 4,
n = 0 bis 200,
$-NHR^2$ und/oder $-NR^2_2$ mit $R^2 = R^1$ oder $-CO-NH_2$ sowie Y = O, $NR^2$ bedeuten

b) 1 bis 89 Mol-% Baugruppen der Formel II

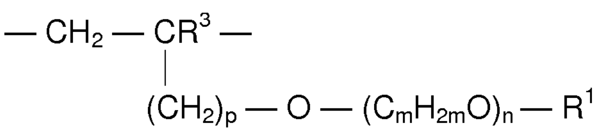

II

worin $R^3$ = H, aliphatischer Kohlenwasserstoffrest mit 1 bis 5 C-Atomen
p = 0 bis 3
und $R^1$, m, n oben genannte Bedeutung besitzen sowie

c) 0,1 bis 10 Mol-% Baugruppen der Formel IIIa oder IIIb

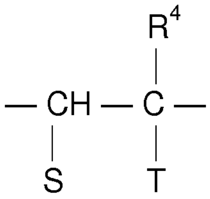

IIIa

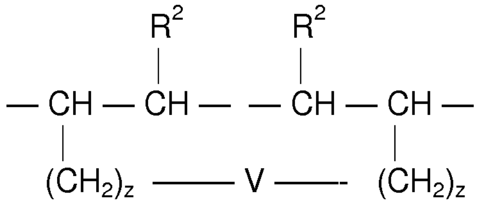

IIIb

wobei

S = -H, $-COOM_a$, $-COOR^5$

T = 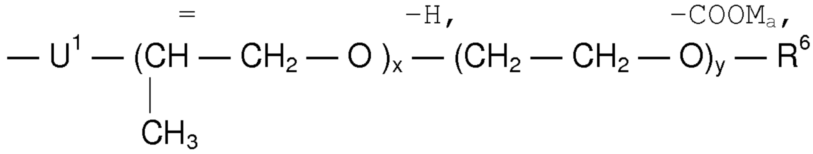

-W-$R^7$
-CO-[NH-$(CH_2)_3$]$_s$-W-$R^7$
-CO-O-$(CH_2)_z$-W-$R^7$
-$(CH_2)_z$-V-$(CH_2)_z$-CH=CH-$R^1$
-$COOR^5$ im Falle von S = -$COOR^5$ oder $COOM_a$
$U^1$ = -CO-NH-, -O-, -$CH_2$O-
$U^2$ = -NH-CO-, -O-, -$OCH_2$
V = -O-CO-$C_6H_4$-CO-O- oder -W-
W =

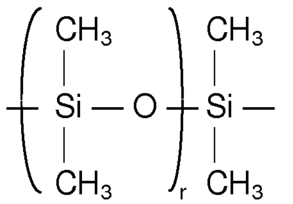

$R^4$ = H, $CH_3$
$R^5$ = aliphatischer Kohlenwasserstoffrest mit 3 bis 20 C-Atomen, cycloaliphatischer Kohlenwasserstoffrest mit 5 bis 8 C-Atomen, Arylrest mit 6 bis 14 C-Atomen
$R^6$ = $R^1$,

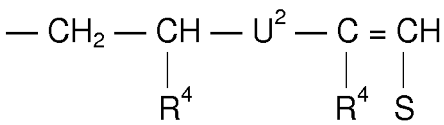

$R^7$ = $R^1$,

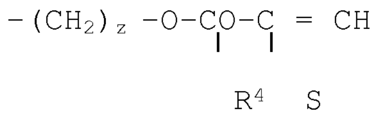

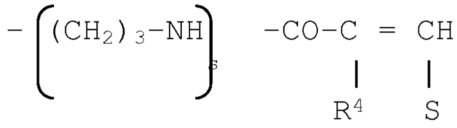

r = 2 bis 100;
s = 1, 2;
z = 0 bis 4
x = 1 bis 150;
y = 0 bis 15

bedeuten.

**9.** Dispersion nach den Ansprüchen 1 bis 6, **dadurch gekennzeichnet, dass** die Basis des Copolymeren ein Oxyalkenylglykol-(meth)acrylsäureester ist und das Copolymere folgende Baugruppen enthält:

5-98 Gew.-% eines Monomeren vom Typ (a) (Alkoxy)polyalkylenglycolmono(meth)acrylester der allgemeinen Formel XV

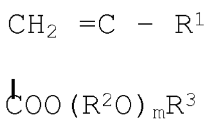

XV

worin

$R^1$ für ein Wasserstoffatom oder die Methylgruppe steht,
$R^2O$ für eine Gattung oder ein Gemisch von zwei oder mehr Gattungen einer Oxyalkylengruppe mit 2-4 Kohlenstoffatomen steht, mit der Maßgabe, dass zwei oder mehrere Gattungen des Gemischs entweder in Form eines Blocks oder in zufälliger Form zugegeben werden können,
$R^3$ für ein Wasserstoffatom oder eine Alkylgruppe mit 1 bis 5 Kohlenstoffatomen steht, und
m ein Wert ist, welcher die durchschnittliche Anzahl der Zugabemole von Oxyalkylengruppen ist, wobei m eine ganze Zahl im Bereich von 1 bis 200 ist,
95 bis 2 Gew.-% eines Monomeren vom (Meth)acrylsäuretyp (b) der allgemeinen Formel XVI

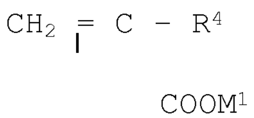

XVI

worin

$R^4$ für ein Wasserstoffatom oder die Methylgruppe steht, und $M^1$ für ein Wasserstoffatom, ein einwertiges Metallatom, ein zweiwertiges Metallatom, eine Ammoniumgruppe oder eine organische Amingruppe,

und 0 bis 50 Gew.-% eines anderen Monomeren (c), das mit diesen Monomeren copolymerisierbar ist, mit der Maßgabe, dass die Gesamtmenge von (a), (b) und (c) 100 Gew.-% ist.

**10.** Verfahren zur Herstellung der Dispersion gemäß der Ansprüche 1 bis 9, **dadurch gekennzeichnet, dass** man ein gefälltes Siliciumdioxidpulver in einer wässerigen Lösung eines Fließmittels, wobei das Fließmittel ein Polycarboxylatether ist, mittels eines geeigneten Dispergieraggregates dispergiert und nachfolgend gegebenenfalls mit Wasser weiter verdünnt

**11.** Verwendung der Dispersion gemäß der Ansprüche 1 bis 9 als Betonzusatzmittel zur Steigerung der Frühfestigkeit von Betonen.

**12.** Zementhaltige Zubereitung enthaltend die Dispersion gemäß der Ansprüche 1 bis 9.

**13.** Zementhaltige Zubereitung nach Anspruch 12, **dadurch gekennzeichnet, dass** die Betonmischung 0,01 bis 2 Gew.- % Siliciumdioxid, bezogen auf Zement, enthält.

## Claims

**1.** Dispersion,
**characterized in that**

- at least one precipitated silicon dioxide and at least one superplasticizer are present, the superplasticizer being a polycarboxylate ether,
- the at least one precipitated silicon dioxide has a BET surface area greater than 50 $m^2/g$,
- the aggregates and/or agglomerates of the precipitated silicon dioxide in the dispersion have a median diameter of less than 1 $\mu m$ and
- the proportion of silicon dioxide is from 5 to 50% by weight, based on the total amount of the dispersion.

**2.** Dispersion according to Claim 1, **characterized in that** the dispersion is free of binders.

**3.** Dispersion according to Claim 1 or 2, **characterized in that** the aggregates and/or agglomerates in the dispersion have a median diameter of from 50 to 750 nm.

**4.** Dispersion according to any of Claims 1 to 3, **characterized in that** the proportion of silicon dioxide in the dispersion is altogether from 10 to 50% by weight, based on the total amount of the dispersion.

**5.** Dispersion according to any of Claims 1 to 4, **characterized in that** the pH of the dispersion is from 8 to 12.

**6.** Dispersion according to any of Claims 1 to 5, **characterized in that** the superplasticizer is a water-soluble polycarboxylate ether.

**7.** Dispersion according to any of Claims 1 to 6, **characterized in that** the polycarboxylate ether is a copolymer based on oxyalkylene glycol alkenyl ethers and the copolymer contains the following structural groups:

a) from 51 to 95 mol% of the structural groups of the Formula Ia and/or Ib and/or Ic

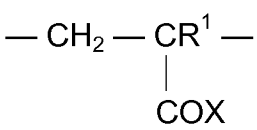
Ia

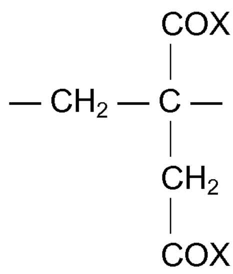
Ib

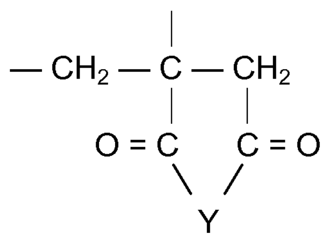
Ic

where

$R^1$ is hydrogen or an aliphatic hydrocarbon radical having 1 to 20 C atoms
X is - $OM_a$, $-O-(C_mH_{2m}O)_n-R^2$, $-NH-(C_mH_{2m}O)_n-R^2$
M is hydrogen, a mono- or divalent metal cation, an ammonium ion or an organic amine radical,
a is a ½ or 1
$R^2$ is hydrogen, an aliphatic hydrocarbon radical having 1 to 20 C atoms, a cycloaliphatic hydrocarbon

radical having 5 to 8 C atoms or an optionally substituted aryl radical having 6 to 14 C atoms
Y is O, $NR^2$
m is from 2 to 4 and n is from 0 to 200,

b) from 1 to 48.9 mol% of a structural group of the general Formula II

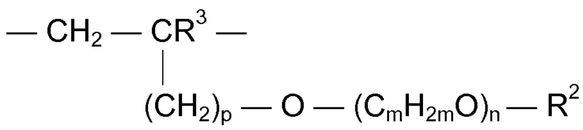

II

where

$R^3$ is hydrogen or an aliphatic hydrocarbon radical having 1 to 5 C atoms
p is from 0 to 3 and
$R^2$, m and n have the abovementioned meaning,

c) from 0.1 to 5 mol% of structural groups of the Formula IIIa or IIIb

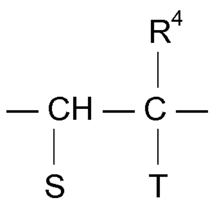

IIIa

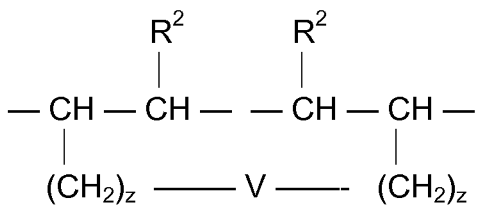

IIIb

where S is -H, - $COOM_a$, - $COOR^5$
T is $-U^1-(CH(CH3)-CH_2-O)_x-(CH_2-CH_2-O_y-R^6$
$-W-R^7$
$-CO-[NH-(CH_2)_3]_s-W-R^7$
$-CO-O-(CH_2)_z-W-R^7$
$-(CH_2)_z-V-(CH_2)_z-CH=CH-R^2$
$-COOR^5$ where S is $-COOR^5$ or $COOM_a$
$U^1$ is -CO-NH-, -O-, $-CH_2O-$
$U^2$ is -NH-CO-, -O-, $-OCH_2-$
V is $-O-CO-C_6H_4-CO-O$ - or -W-

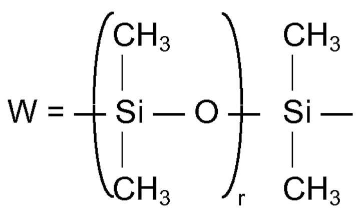

$R^4$ is H, $CH_3$
$R^5$ is an aliphatic hydrocarbon radical having 3 to 20 carbon atoms, a cycloaliphatic hydrocarbon radical having 5 to 8 C atoms or an aryl radical having 6 to 14 C atoms
$R^6$ is $R^2$,

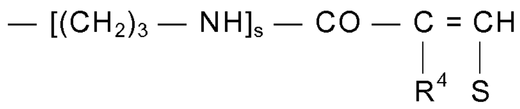

$R^7$ is $R^2$,

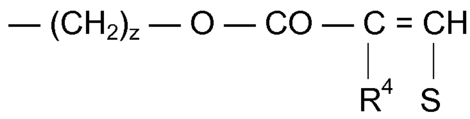

r is from 2 to 100
s is 1 or 2
z is from 0 to 4
x is from 1 to 150
y is from 0 to 15
and

d) from 0 to 47.9 mol of structural groups of the general Formula IVa and/or IVb

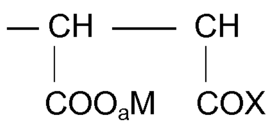

IVa

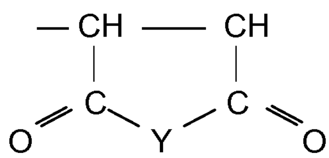

IVb

with the abovementioned meaning for a, M, X and Y.

**8.** Dispersion according to Claims 1 to 6, **characterized in that** the basis of the copolymer is an oxyalkenyl glycol alkenyl ether and the copolymer contains the following structural groups:

a. from 10 to 90 mol% of structural groups of the Formula IVa and/or IVb

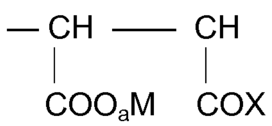

IVa

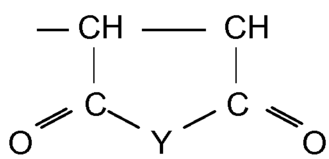

IVb

where

M is hydrogen, a monovalent or a divalent metal cation, an ammonium ion or an organic amine radical,
a is 1 or, where M is a divalent metal cation, is a ½,
X is likewise $-OM_a$ or
$-O-(C_mH_{2m}O)_n-$ $R^1$ with $R^1$ = H, aliphatic hydrocarbon radical having 1 to 20 carbon atoms, cycloaliphatic hydrocarbon radical having 5 to 8 C atoms, optionally substituted aryl radical having 6 to 14 C atoms,
m is from 2 to 4,
n is from 0 to 200,
$-NHR^2$ and/or $-NR^2_2$ with $R^2 = R^1$ and $-CO-NH_2$ and Y is O, $NR^2$

b) from 1 to 89 mol% of structural groups of the Formula II

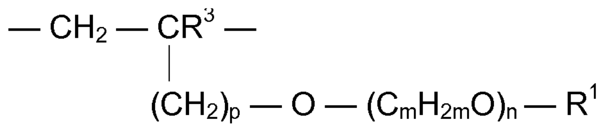

II

in which $R^3$ is H, aliphatic hydrocarbon radical having 1 to 5 C atoms
p is from 0 to 3
and $R^1$, m, n have the abovementioned meaning, and

c) from 0.1 to 10 mol% of structural groups of the Formula IIIa or IIIb

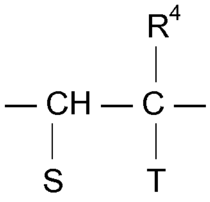

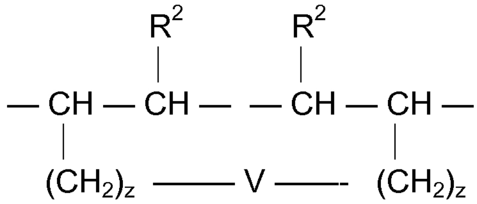

IIIa IIIb

where

S is -H, $-COOM_a$, $-COOR^5$

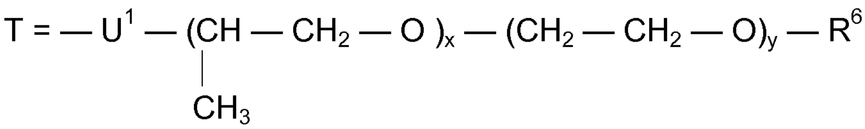

- $W-R^7$
- $CO-[NH-(CH_2)_3]_s-W-R^7$
- $CO-O-(CH_2)_z-W-R^7$
- $(CH_2)_z-V-(CH_2)_z-CH=CH-R^1$
- $COOR^5$ where S is $-COOR^5$ or $COOM_a$ $U^1$ is -CO-NH-, -O-, $-CH_2O-U^2$ is -NH-CO-, -O-, $-OCH_2$ V is $-O-CO-C_6H_4-CO-O-$ or -W-W is

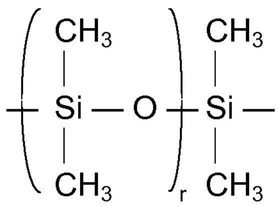

$R^4$ is H, $CH_3$
$R^5$ is an aliphatic hydrocarbon radical having 3 to 20 C atoms, a cycloaliphatic hydrocarbon radical having 5 to 8 C atoms, an aryl radical having 6 to 14 C atoms
$R^6$ is $R^1$,

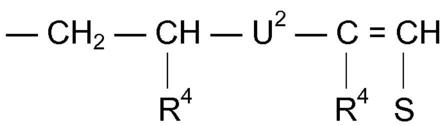

$R^7$ is $R^1$,

$$-(CH_2)_z-O-CO-C=CH$$

$$R^4 \quad S$$

$$-\left[(CH_2)_3-NH\right]_s-CO-C=CH$$

$$R^4 \quad S$$

r is from 2 to 100;
s is 1 or 2;
z is from 0 to 4;
x is from 1 to 150;
y is from 0 to 15.

**9.** Dispersion according to Claims 1 to 6, **characterized in that** the basis of the copolymer is an oxyalkenyl glycol (meth)acrylic ester and the copolymer contains the following structural groups:

from 5 - 98% by weight of a monomer of the type (a) (alkoxy)polyalkylene glycol mono(meth)acrylic ester of the general Formula XV

$$CH_2=C-R^1$$

$$COO(R^2O)_mR^3 \qquad XV$$

in which

$R^1$ is a hydrogen atom or the methyl group,
$R^2O$ is a class or a mixture of two or more classes of an oxyalkylene group having 2 - 4 carbon atoms, with the proviso that two or more classes of the mixture may be added either in the form of a block or in random form,
$R^3$ is a hydrogen atom or an alkyl group having 1 to 5 carbon atoms, and
m is a value which is the average number of added moles of oxyalkylene groups, m being an integer in the range from 1 to 200,

from 95 to 2% by weight of a monomer of the (meth) acrylic acid type (b) of the general Formula XVI

$$CH_2=C-R^4 \qquad XVI$$

$$COOM^1$$

in which
$R^4$ is a hydrogen atom or the methyl group and $M^1$ is a hydrogen atom, a monovalent metal atom, a divalent metal atom, an ammonium group or an organic amine group,
and from 0 to 50% by weight of another monomer (c) which is copolymerizable with these monomers, with the proviso that the total amount of (a), (b) and (c) is 100% by weight.

**10.** Process for the preparation of the dispersion according to Claims 1 to 9, **characterized in that** a precipitated silicon dioxide powder is dispersed in an aqueous solution of a superplasticizer, the superplasticizer being a polycarboxylate ether, by means of a suitable dispersing unit and subsequently optionally further diluted with water.

**11.** Use of the dispersion according to Claims 1 to 9 as a concrete admixture for increasing the early strength of concretes.

**12.** Cement-containing preparation containing the dispersion according to Claims 1 to 9.

**13.** Cement-containing preparation according to Claim 12, **characterized in that** the concrete mix contains from 0.01 to 2% by weight of silicon dioxide, based on cement.

## Revendications

**1.** Dispersion, **caractérisée en ce que**

- elle contient au moins un dioxyde de silicium précipité et au moins un agent fluidifiant, l'agent fluidifiant étant un polycarboxylate-éther,
- ledit au moins un dioxyde de silicium précipité présente une surface BET supérieure à 50 $m^2/g$,
- les agrégats et/ou agglomérats du dioxyde de silicium précipité dans la dispersion présentent un diamètre moyen inférieur à 1 μm et
- la proportion de dioxyde de silicium est de 5 à 50% en poids, par rapport à la quantité totale de la dispersion.

**2.** Dispersion selon la revendication 1, **caractérisée en ce que** la dispersion est exempte de liants.

**3.** Dispersion selon la revendication 1 ou 2, **caractérisée en ce que** les agrégats et/ou agglomérats dans la dispersion présentent un diamètre moyen de 50 à 750 nm.

**4.** Dispersion selon l'une quelconque des revendications 1 à 3, **caractérisée en ce que** la proportion de dioxyde de silicium dans la dispersion vaut, au total, 10 à 50% en poids, par rapport à la quantité totale de la dispersion.

**5.** Dispersion selon l'une quelconque des revendications 1 à 4, **caractérisée en ce que** le pH de la dispersion est situé entre 8 et 12.

**6.** Dispersion selon l'une quelconque des revendications 1 à 5, **caractérisée en ce que** l'agent fluidifiant est un polycarboxylate-éther soluble dans l'eau.

**7.** Dispersion selon l'une quelconque des revendications 1 à 6, **caractérisée en ce que** le polycarboxylate-éther est un copolymère à base d'oxyalcénylglycolalcényléthers et le copolymère contient les groupes constitutifs suivants :

a) 51 à 95% en mole de groupes constitutifs de formule Ia et/ou Ib et/ou Ic

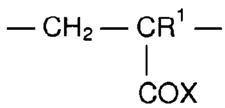

Ia

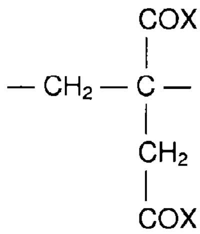

Ib

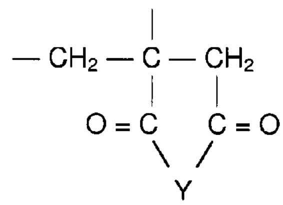

Ic

dans lesquelles

$R^1$ = hydrogène ou un radical hydrocarboné aliphatique comprenant 1 à 20 atomes de carbone,
X = $-OM_a$, $-O-(C_mH_{2m}O)_n-R^2$, $-NH-(C_mH_{2m}O)n-R^2$
M = hydrogène, un cation métallique monovalent ou divalent, un ion d'ammonium, un radical amine organique,
a = 1/2 ou 1
$R^2$ = hydrogène, un radical hydrocarboné aliphatique comprenant 1 à 20 atomes de carbone, un radical hydrocarboné cycloaliphatique comprenant 5 à 8 atomes de carbone, un radical aryle le cas échéant substitué comprenant 6 à 14 atomes de carbone,
Y = O, $NR^2$

m = 2 à 4 et
n = 0 à 200,

b) 1 à 48,9% en mole de groupes constitutifs de formule générale II

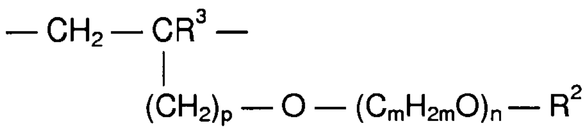

II

dans laquelle

$R^3$ représente hydrogène ou un radical hydrocarboné aliphatique comprenant 1 à 5 atomes de carbone,
p vaut 0 à 3 et
$R^2$, m et n présentent la signification susmentionnée,

c) 0,1 à 5% en mole de groupes constitutifs de formule IIIa ou IIIb

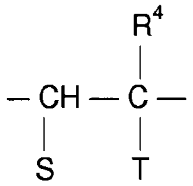

IIIa

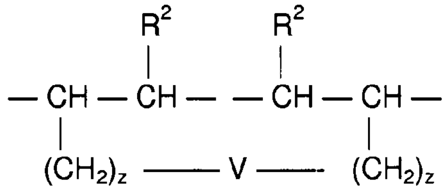

IIIb

dans laquelle

S = -H, $-COOM_a$, $-COOR^5$
T = $-U^1-(CH(CH_3)-CH_2-O)_x-(CH_2-CH_2-O)_y-R^6$

$-W-R^7$
$-CO-[NH-(CH_2)_3]_s-W-R^7$
$-CO-O-(CH_2)_z-W-R^7$
$-(CH_2)_z-V-(CH_2)_z-CH=CH-R^2$
$-COOR^5$ dans le cas de S = $-COOR^5$ ou $COOM_a$
$U^1$ = -CO-NH-, -O-, $-CH_2O-$
$U^2$ = -NH-CO-, -O-, $-OCH_2-$
V = $-O-CO-C_6H_4-CO-O-$ ou -W-

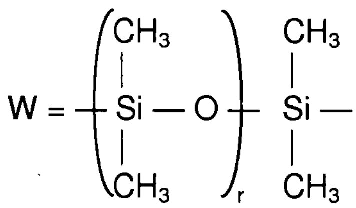

$R^4$ = H, $CH_3$
$R^5$ = un radical hydrocarboné aliphatique comprenant 3 à 20 atomes de carbone, un radical hydrocarboné cycloaliphatique comprenant 5 à 8 atomes de carbone, un radical aryle comprenant 6 à 14 atomes de carbone

$R^6$ = $R^2$, 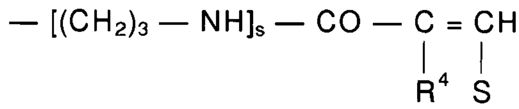

$R^7$ = $R^2$, 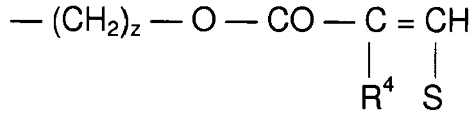

r = 2 à 100
s = 1, 2
z = 0 à 4
x = 1 à 150
y = 0 à 15

et

d) 0 jusqu'à 47,9% en mole de groupes constitutifs formule générale IVa et/ou IVb

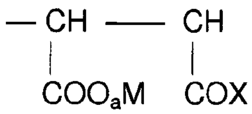

IVa

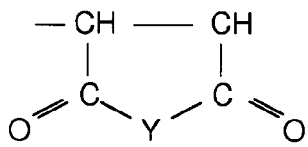

IVb

avec la signification indiquée ci-dessus pour a, M, X et Y.

**8.** Dispersion selon les revendications 1 à 6, **caractérisée en ce que** la base du copolymère est un oxyalcénylglycolalcényléther et le copolymère contient les groupes constitutifs suivants :

a) 10 à 90% en mole de groupes constitutifs de formule IVa et/ou IVb

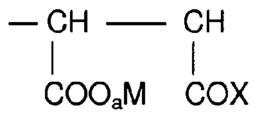

IVa

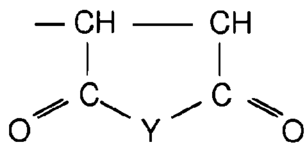

IVb

dans lesquelles

M = hydrogène, un cation métallique monovalent ou divalent, un ion d'ammonium, un radical amine organique,
a = 1, ou pour le cas où M représente un cation métallique monovalent, 1/2,
X = également $-OM_a$ ou $-O-(C_mH_{2m}O)_n-R^1$ avec $R^1$ = H, un radical hydrocarboné aliphatique comprenant 1 à 20 atomes de carbone, un radical hydrocarboné cycloaliphatique comprenant 5 à 8 atomes de carbone, un radical aryle le cas échéant substitué comprenant 6 à 14 atomes de carbone,
m = 2 à 4,
n = 0 à 200,

$-NHR^2$ et/ou $-NR^2_2$ avec $R^2 = R^1$ ou $-CO-NH_2$ ainsi que Y = O, $NR^2$

b) 1 à 89% en mole de groupes constitutifs de formule II

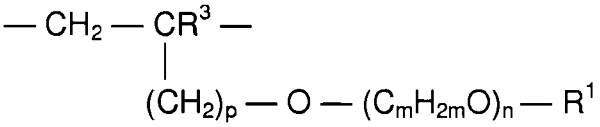

II

dans laquelle $R^3$ = H, un radical hydrocarboné aliphatique comprenant 1 à 5 atomes de carbone, p = 0 à 3 et $R^1$, m, n présentent la signification susmentionnée, ainsi que

c) 0,1 à 10% en mole de groupes constitutifs de formule IIIa ou IIIb

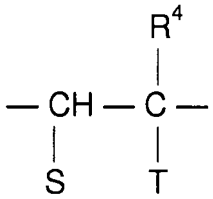

IIIa

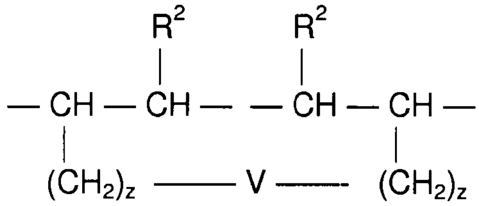

IIIb

dans lesquelles

S = -H, $-COOM_a$, $-COOR^5$

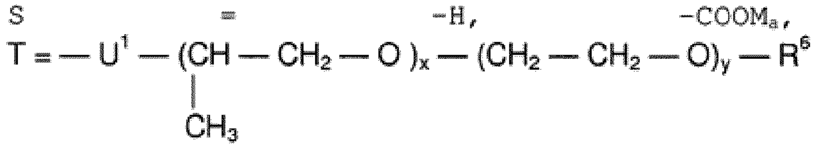

$-W-R^7$

$-CO-[NH-(CH_2)_3]_z-W-R^7$

$-CO-O-(CH_2)_z-W-R^7$

$-(CH_2)_z-V-(CH_2)_z-CH=CH-R^1$

$-COOR^5$ dans le cas de S = $-COOR^5$ ou $COOM_a$

$U^1$ = -CO-NH-, -O-, $-CH_2O-$

$U^2$ = -NH-CO-, -O-, $-OCH_2$

V = $-O-CO-C_6H_4-CO-O-$ ou -W-

W =

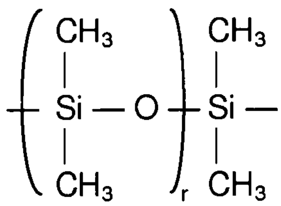

$R^4$ = H, $CH_3$

$R^5$ = un radical hydrocarboné aliphatique comprenant 3 à 20 atomes de carbone, un radical hydrocarboné cycloaliphatique comprenant 5 à 8 atomes de carbone, un radical aryle comprenant 6 à 14 atomes de carbone

$R^6$ = $R^1$,

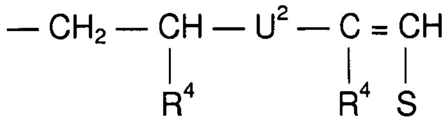

$-R^7$ = $R^1$,

$$-(CH_2)_z-O-CO-C=CH$$

$$R^4 \quad S$$

$$-\left((CH_2)_3-NH\right)_r-CO-C=CH$$

$$R^4 \quad S$$

r = 2 à 100 ;
s = 1, 2 ;
z = 0 à 4
x = 1 à 150 ;
y = 0 à 15.

**9.** Dispersion selon les revendications 1 à 6, **caractérisée en ce que** la base du copolymère est un ester de l'acide (méth)acrylique d'oxyalcénylglycol et le copolymère contient les groupes constitutifs suivants :

5-98% en poids d'un monomère du type (a) ester mono(méth)acrylique de (alcoxy)polyalkylèneglycol de formule générale XV

$$CH_2=C-R^1$$

$$COO(R^2O)_mR^3 \qquad XV$$

dans laquelle

$R^1$ représente un atome d'hydrogène ou le groupe méthyle,
$R^2O$ représente un type ou un mélange de deux types ou plus d'un groupe oxyalkylène comprenant 2-4 atomes de carbone, à condition que deux types ou plus du mélange puissent être ajoutés, soit sous forme d'un bloc, soit sous forme aléatoire,
$R^3$ représente un atome d'hydrogène ou un groupe alkyle comprenant 1 à 5 atomes de carbone, et
m est une valeur qui représente le nombre moyen de moles ajoutées de groupes oxyalkylène, m représentant un nombre entier dans la plage de 1 à 200,
95 à 2% en poids d'un monomère du type acide (méth)acrylique (b) de formule générale XVI

$$CH_2=C-R^4 \qquad XVI$$

$$COOM^1$$

dans laquelle
$R^4$ représente un atome d'hydrogène ou le groupe méthyle et $M^1$ représente un atome d'hydrogène, un atome métallique monovalent, un atome métallique divalent, un groupe d'ammonium ou un groupe amine organique, et 0 à 50% en poids d'un autre monomère (c), qui est copolymérisable avec ces monomères, à condition que la quantité totale de (a), (b) et (c) vaille 100% en poids.

**10.** Procédé pour la préparation de la dispersion selon les revendications 1 à 9, **caractérisé en ce qu'**on disperse une poudre de dioxyde de silicium précipité dans une solution aqueuse d'un fluidifiant, le fluidifiant étant un polycarboxylate-éther, au moyen d'un appareil de dispersion approprié et on dilue ensuite le cas échéant avec de l'eau.

**11.** Utilisation de la dispersion selon les revendications 1 à 9 comme additif pour béton pour l'augmentation de la solidité précoce de bétons.

**12.** Composition contenant du ciment, contenant la dispersion selon les revendications 1 à 9.

**13.** Composition contenant du ciment selon la revendication 12, **caractérisée en ce que** le mélange de béton contient 0,01 à 2% en poids de dioxyde de silicium, par rapport au ciment.

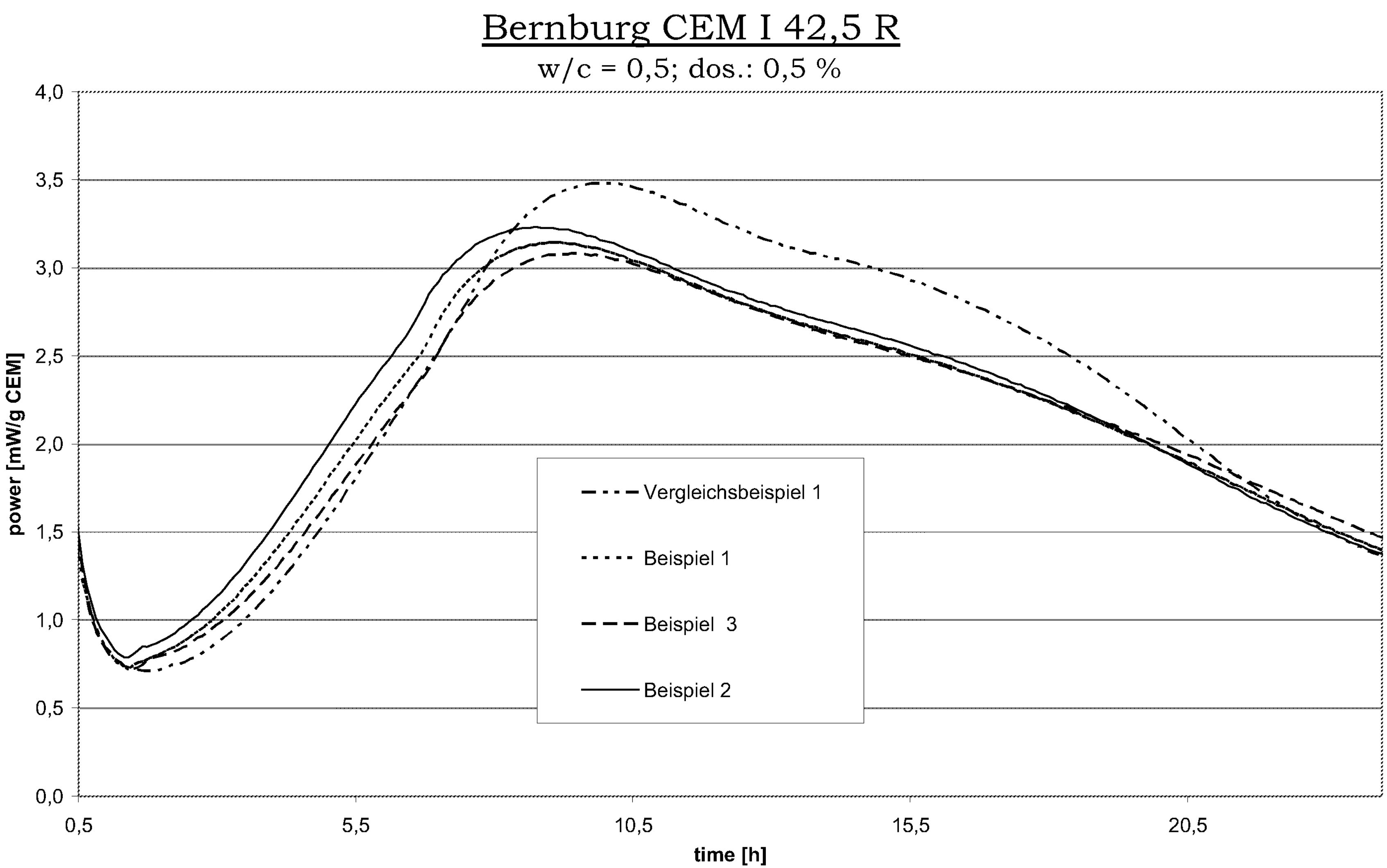


**Figur 1:** Wärmeentwicklung in Zementleim nach Zugabe verschiedener Dispersionen gefällter Kieselsäuren

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 214412 A
- DE PS1671017 C
- US 5707445 B1
- EP 1110981 A2
- EP 1142847 A2
- US 3135617 A
- WO 02070429 A
- US 6752866 B
- WO 0190024 A
- US 5030286 A
- US 6761867 B
- US 2002014187 A1
- EP 0214412 A
- DE 1671017
- US 5707445 A
- EP 1110981 A
- EP 1142847 A
- EP 736553 A
- EP 1189955 A


### In der Beschreibung aufgeführte Nicht-Patentliteratur


- Ullmann's Encycplopedia of Industrial Chemistry. vol. A23, 642-647
- Ullmann's Encycplopedia of Industrial Chemistry,. vol. A23, 629-635
- Üllmann's Encycplopedia of Industrial Chemistry. vol. A23, 635-642